# EUROPÄISCHE PATENTSCHRIFT

(11) **EP 3 879 130 B1**
(45) Veröffentlichungstag und Bekanntmachung des Hinweises auf die Patenterteilung: **12.02.2025**
(21) Anmeldenummer: 21157796.0
(22) Anmeldetag: 18.02.2021
(51) Int. Cl.: F16B 37/04, F16B 37/08

(54) **MONTAGEEINRICHTUNG FÜR ABDECKPLATTE**
MOUNTING DEVICE FOR COVER PLATE
DISPOSITIF DE MONTAGE POUR PLAQUE DE RECOUVREMENT

(30) Priorität: 10.03.2020 DE 102020106458
(43) Veröffentlichungstag der Anmeldung: 15.09.2021
(73) Patentinhaber: TECE GmbH, 48282 Emsdetten (DE)
(72) Erfinder: Meiermann, André, 48159 Münster (DE); Krabbe, Martin, 48341 Altenberge (DE); Schnippe, Timo, 48493 Wettringen (DE); Rottwinkel, Sven, 48565 Steinfurt (DE); Backherms, Florian, 48488 Emsbüren (DE); Heitjans, Julian, 48282 Emsdetten (DE); Wagner, Utz, 48155 Münster (DE)
(74) Vertreter: Lippert Stachow Patentanwälte Rechtsanwälte

(56) Entgegenhaltungen:
- DE-U1- 202008 007 513
- FR-A1- 2 640 336
- US-A- 5 749 691
- US-B1- 6 361 260

## Beschreibung

Die Erfindung betrifft eine Montageeinrichtung, ein System umfassend die Montageeinrichtung und ein Verfahren zur Verwendung des Systems zur Fixierung einer Abdeckplatte an einer Unterputzeinheit, insbesondere an einer Wandung eines Spülkastens.

Gattungsgemäße Montagevorrichtungen werden bei Sanitärinstallationen, insbesondere bei Toiletteninstallationen, verwendet. Die Montageeinrichtungen werden verwendet, um Abdeckplatten, die dazu verwendet werden, um Elemente von Unterputzeinheiten einer Sanitärinstallation, beispielweise Elemente eines Unterputzspülkastens, einer Unterputzthermostateinheit oder einer Unterputzrohranschlussstelle, zu verdecken, relativ zu den Unterputzeinheiten festzulegen. Die Abdeckplatten dienen dabei jedenfalls der Abdeckung, oftmals jedoch auch zur Realisierung weiterer Funktionen. Solche Abdeckplatten sind daher oftmals als Betätigungsplatten ausgebildet, die Betätigungstasten aufweisen, über die die Unterputzeinheit betätigt werden kann. Die Abdeckplatten sind somit üblicherweise so an einer Vorwand montiert, dass sie von einem Raum aus, der durch die Vorwand begrenzt ist, zugänglich sind, und verdecken dabei einen Abschnitt der Unterputzeinheit, die sich hinter der Vorwand befindet. Eine Vorwand ist neben der technisch üblichen Definition insbesondere als Wandelement zu verstehen, welches vor einer weiteren Wand angeordnet und mit dieser verbunden ist unter Ausbildung eines Hohlraums zwischen Vorwand und Wand. Zur Betätigung eines Spülkastens ist meist eine von dem Spülkasten separat beabstandet angeordnete, als Betätigungsplatte ausgebildete Abdeckplatte vorgesehen. Die Betätigungsplatte dient der Betätigung zur Auslösung von Funktionen des Spülkastens. Die Betätigungsplatte weist üblicherweise einen Betätigungsplattenrahmen auf, der relativ zum Spülkasten lösbar fixiert wird, sowie eine Betätigungsblende mit Betätigungstasten, die lösbar an dem Betätigungsplattenrahmen fixiert wird. Die Betätigungstasten werden üblicherweise über Betätigungsstifte oder über eine Elektronik mit einem Ablaufventil verbunden, so dass über sie eine Spülung ausgelöst werden kann. Die Betätigungsplatte ist herkömmlicherweise durch entsprechende Verbindungsmittel am Spülkasten fixiert. Ein gattungsgemäßer Spülkasten weist eine Wandung auf, in der Spülwasser für eine Spülung gesammelt wird. Üblicherweise wird die Betätigungsplatte relativ zur Wandung fixiert, insbesondere mittelbar oder unmittelbar an der Wandung fixiert. Bevorzugt wird sie an einer Spritzschutzplatte fixiert, die an der Wandung lösbar fixiert ist und eine in der Wandung vorgesehene Revisionsöffnung verschließt. Der Abschnitt der Betätigungsplatte, über den die Betätigungsplatte betätigbar ist, insbesondere die Betätigungsplatte, und die Wandung sind üblicherweise im Betriebszustand voneinander beabstandet und durch die entsprechenden Verbindungsmittel relativ zueinander festgelegt. Analog wird sonst bei einer Unterputzeinheit üblicherweise ein Wandabschnitt vorgesehen, beispielsweise durch eine Blech- oder Kunststoffplatte oder ein geeignetes Profil, an dem über herkömmliche Verbindungsmittel die Abdeckplatte fixiert wird. Häufig verdeckt die Abdeckplatte, insbesondere die erläuterte Betätigungsplatte eines Spülkastens, eine Wartungsöffnung in der Vorwand. Zu Wartungszwecken kann die Abdeckplatte gelöst und von der Wartungsöffnung entfernt werden, um insbesondere für Wartungspersonal einen Zugang zu den optisch verdeckten Elementen der Unterputzeinheit, insbesondere des Spülkastens, durch die Wartungsöffnung zu ermöglichen. Zur Durchführung der Wartung wird daher die Fixierung der Abdeckplatte, insbesondere der Betätigungsplatte relativ zur Wandung des Spülkastens, regelmäßig gelöst und nach Abschluss der Wartung wiederhergestellt. Die Verbindungsmittel sind deshalb üblicherweise dergestalt ausgeführt, dass sie eine lösbare Fixierung ermöglichen. Die Verbindungsmittel sind gattungsgemäß als Montageeinrichtung ausgeführt, umfassend einen Gewindestab, der sich mit seiner Längsachse in einer Längsrichtung erstreckt und insbesondere entlang des überwiegenden Teils seiner Längserstreckung ein Gewinde aufweist. Weiterhin umfasst die Montageeinrichtung gattungsgemäß üblicherweise ein an der Unterputzeinheit, insbesondere an der Wandung des Spülkastens fixiertes, korrespondierend zu dem Gewinde des Gewindestabs ausgebildetes Gewinde. Unter der Längserstreckung des Gewindestabs ist dabei die Erstreckung zu verstehen, die entlang einer Längsachse verläuft, entlang derer der Gewindestab sein Gewinde ausbildet, so dass das Gewinde um die Längsachse umläuft. Die Richtung entlang dieser Längsachse ist als Längsrichtung bezeichnet. Zur Fixierung der Betätigungsplatte ist der Gewindestab durch eine dafür vorgesehene Öffnung der Abdeckplatte geführt und in das an dem Spülkasten vorgesehene Gewinde geschraubt, wodurch eine Kraft aufgebaut ist, die die Abdeckplatte an die Vorwand anlegt und relativ zu der Unterputzeinheit, insbesondere zu der Wandung des Spülkastens fixiert. Meist ist zur Fixierung unterstützend zumindest eine weitere Montageeinrichtung in analoger Weise verwendet. Diese mehreren Montageeinrichtungen sind meist in einer Richtung senkrecht zur Längsrichtung voneinander beabstandet, wobei die Montageeinrichtungen bevorzugt jeweils einen Abstand zum Mittelpunkt der Abdeckplatte, bezogen auf dieselbe Richtung, aufweisen. Die Länge des Gewindestabs überschreitet in gattungsgemäßen Montageeinrichtungen regelmäßig eine erforderliche Mindestlänge, die dem Abstand zwischen der Abdeckplatte und der Unterputzeinheit, insbesondere der Betätigungsplatte und der Wandung des Spülkastens entspricht. Denn da der Abstand zwischen einer Raumseite der Vorwand, an der die Abdeckplatte durch die zumindest eine Montageeinrichtung angelegt fixiert werden soll, je nach Raumumgebung variieren kann, ist üblicherweise eine solche Länge des Gewindestabs vorgesehen, mit der auch bei überdurchschnittlich hohem Abstand zwischen Betätigungsplatte und Wandung eine entsprechende Fixierung erfolgen kann. In einigen Fällen überschreitet die Länge des Gewindestabs die erforderliche Mindestlänge um mindestens 50 %, insbesondere mindestens 100 %. Dadurch ist bei der Montage zur Herstellung des Betriebszustandes ein vergleichsweise langwieriges Einschrauben des Gewindestabes in das korrespondierende Gewinde an der Unterputzeinheit, insbesondere des Spülkastens erforderlich. Im Stand der Technik sind bereits Montageeinrichtungen zum schnellen Befestigen bekannt. Beispielsweise offenbart US 6 361 260 B1 eine Montageeinrichtung mit einer Gewindebuchse und einem Gewindestab, wobei die Gewindebuchse mehrere Gewindesegmente umfasst, die in einer Hülse gehalten sind und durch eine Federeinrichtung dergestalt an eine Schrägfläche der Hülse gepresst sind, dass sie durch die Federeinrichtung radial zum Gewindebolzen hin mit einer Federkraft beaufschlagt sind, wobei bei einer Überwindung der Federkraft die Gewindesegmente radial in der Hülse auseinander bewegt werden können, sodass der Gewindestab ohne ein Verdrehen an den Gewindesegmenten vorbei bewegt werden kann. In US 5 749 691 A ist eine Montageeinrichtung mit einem Gewindestab und einer Gewindebuchse offenbart, wobei die Gewindebuchse mehrere Gewindesegmente umfasst, die durch eine Federeinrichtung radial nach innen zum Gewindestab hin an diesen gepresst gehalten sind, wobei durch Betätigung einer Betätigungseinrichtung, die der von der Federeinrichtung aufgebrachten Kraft entgegenwirkt, die Gewindesegmente radial nach außen bewegt werden können, sodass sie nicht mehr in Eingriff mit dem Gewinde des Gewindestabs sind und somit der Gewindestab ohne Verdrehen relativ zur Gewindebuchse bewegt werden kann. Aus FR 2 640 336 A1 ist eine Montageeinrichtung mit einem Gewindestab und einer Gewindebuchse bekannt, wobei die Gewindebuchse zwei zueinander verkippbar gelagerte Abschnitte aufweist, die durch einen umlaufenden Kragen zusammengehalten werden, wobei der Kragen relativ zu den Abschnitten verschiebbar ist und die Abschnitte und der Kragen eine solche zueinander korrespondierende Kontur aufweisen, dass die Abschnitte je nach Position des Kragens relativ zu ihnen zwischen sich einen unterschiedlich großen lichten Querschnitt mit Gewindegängen aufweisen.

Aufgabe der Erfindung ist, eine Montageeinrichtung und ein Verfahren zur Fixierung einer Abdeckplatte an einer Unterputzeinheit bereitzustellen, die zumindest einige der Nachteile gattungsgemäßer Montageeinrichtungen zumindest teilweise behebt.

Als eine erfindungsgemäße Lösung wird eine Montageeinrichtung zur lösbaren Fixierung einer Abdeckplatte relativ zu einer Unterputzeinheit, insbesondere zu dem Spülkasten, insbesondere der Wandung des Spülkastens vorgeschlagen, die einen Gewindestab aufweist und eine Gewindebuchse aufweist. Der Gewindestab erstreckt sich mit seiner Längsachse in einer Längsrichtung. Der Gewindestab ist in einem Montagezustand innerhalb einer Längserstreckung von der Gewindebuchse aufgenommen. Die Längserstreckung ist innerhalb eines Abschnitts der Längserstreckung des Gewindestabes ausgebildet. Die Längserstreckung kann durchgehend ausgebildet sein. Die Längserstreckung ist bevorzugt kleiner als die Hälfte, insbesondere kleiner als ein Viertel der Längserstreckungslänge des Gewindestabs, beträgt insbesondere zwischen einem Zehntel und einem Halben der Längserstreckungslänge des Gewindestabs. Gewindestab und Gewindebuchse können im Montagezustand und im Haltezustand ineinander angeordnet sein. Gewindestab und Gewindebuchse können selbstverständlich auch in einem weiteren Zustand der Montageeinrichtung, der keinem der genannten Zustände entspricht, ebenfalls ineinander angeordnet sein, wobei ein bestimmter Zustand eine bestimmte Anordnung der Bestandteile der Montageeinrichtung zueinander bezeichnet.

Der Gewindestab weist ein Stabgewinde auf, das um die Längsachse des Gewindestabes verläuft. Die Längsachse des Gewindestabes entspricht somit der Drehachse, um die der Gewindestab drehbar ist, um das Stabgewinde in ein korrespondierendes Gewinde zu schrauben und/oder aus einer Schraubverbindung mit dem korrespondierenden Gewinde zu lösen. Der Gewindestab kann als Schraube ausgebildet sein. Der Gewindestab kann ein Kopfelement, insbesondere einen Schraubenkopf aufweisen, das radial, d. h. senkrecht zur Längsrichtung, über das Stabgewinde vorsteht und insbesondere an einem Längsende des Gewindestabs ausgebildet ist. Der Schraubenkopf ist auf übliche Weise gestaltet, beispielsweise an Inbus-, Kreuzschlitz-, Sechskant oder Torx-Schraubenkopf, so dass über ein Werkzeug auf einfache Weise ein Verdrehen des Gewindestabs ermöglicht ist. Insbesondere kann das Kopfelement zu Anlage an der Abdeckplatte vorgesehen sein und eine Fläche zur Anlage an der Abdeckplatte aufweisen. Die Gewindebuchse weist ein Buchsengewinde auf. Buchsengewinde und Stabgewinde sind jeweils zumindest abschnittsweise zueinander korrespondierend ausgebildet. Das Stabgewinde kann über mindestens 50 %, insbesondere mindestens 70 % der Längserstreckungslänge des Gewindestabs hinweg ausgebildet sein, insbesondere durchgehend umlaufend ausgebildet sein oder in Umfangsabschnitten umlaufend ausgebildet sein. Das Stabgewinde kann Unterbrechungen in Längsrichtung entlang der Längsachse aufweisen oder in Längsrichtung durchgehend ausgebildet sein. Das Buchsengewinde kann durchgehend oder in Umfangsabschnitten umlaufend ausgebildet sein. Das Buchsengewinde kann in Längsrichtung unterbrochen oder durchgehend ausgebildet sein. Das Buchsengewinde und das Stabgewinde können in dem Montagezustand und in dem Haltezustand ineinandergreifen, wobei sie insbesondere einander im Haltezustand und im Montagezustand unterschiedlich tief hintergreifen. Das Buchsengewinde kann erst durch einen Eingriff mit dem korrespondieren Stabgewinde ausbildbar sein, insbesondere indem die Gewindebuchse einen verformbaren, insbesondere elastisch verformbaren Abschnitt aufweist, in den das Stabgewinde einschraubbar ist unter Ausbildung des Buchsengewindes. In dem Fall liegen im Haltezustand Stab- und Buchsengewinde vor und insbesondere auch im Montagezustand, wobei bevorzugt der Gewindestab für sich genommen und insbesondere die Gewindebuchse für sich genommen, d. h. als Bauteileigenschaft ohne zwingenden Zusammenhang zu einem anderen Bauteil, ein entsprechendes Gewinde aufweist. Das Stabgewinde bzw. Buchsengewinde kann erst durch den Eingriff mit dem korrespondieren Buchsengewinde bzw. Stabgewinde ausbildbar sein.

Bei Aufbringung einer externen Verschiebekraft sind Gewindestab und Gewindebuchse im Montagezustand bevorzugt zerstörungsfrei und reversibel relativ zueinander entlang der Längsrichtung verschiebbar. Die Verschiebekraft wirkt zwischen Gewindestab und Gewindebuchse und weist einen vorbestimmten Betrag auf.

In dem Haltezustand sind Gewindestab und Gewindebuchse bei Aufbringung der externen Verschiebekraft relativ zueinander entlang der Längsrichtung nicht verschiebbar. In dem Haltezustand ist eine Verschiebung von Gewindestab und Gewindebuchse relativ zueinander somit vermieden, wenn im Haltezustand eine genau solche externe Verschiebekraft aufgebracht wird, deren Aufbringung im Montagezustand eine Verschiebung bewirkt. Als Verschiebung ist allgemein eine insbesondere translatorische Bewegung zweier Körper relativ zueinander gemeint, welche von weiteren Bewegungen entkoppelt ausführbar ist. Insbesondere ist als Verschiebung eine Bewegung zweier Körper relativ zueinander gemeint, welche keine Zwangskopplung mit einer weiteren Bewegung aufweist. In dem Haltezustand ist eine solche Zwangskopplung vorhanden und umfasst insbesondere die Zwangskopplung einer Rotation und einer Translation. Die Gewindebuchse und der Gewindestab liegen in dem Montagezustand und in dem Haltezustand zum Hemmen einer Relativbewegung entlang der Längsrichtung, insbesondere innerhalb der Längserstreckung, mit zueinander korrespondierenden Halteflächen aneinander an. Im Montagezustand und im Haltezustand ist eine Krafteinwirkung entlang Längsrichtung gehemmt.

Gewindestab und Gewindebuchse sind erfindungsgemäß derart zueinander korrespondierend ausgebildet, dass der in Längsrichtung wirkenden externen Verschiebekraft im Montagezustand eine erste Haltekraft entgegengerichtet wirkt, wobei, wenn die externe Verschiebekraft bezüglich ihres Betrages den Betrag einer ersten Haltekraft nicht überschreitet, die Verschiebung von Gewindestab und Gewindebuchse entlang der Längsrichtung relativ zueinander vermieden ist, und bei Aufbringung der externen Verschiebekraft, wenn die externe Verschiebekraft bezüglich ihres Betrages den Betrag der ersten Haltekraft überschreitet, Gewindestab und Gewindebuchse entlang der Längsrichtung relativ zueinander verschiebbar sind, wobei in einem Haltezustand durch ein Ineinandergreifen von einem um die Längsachse des Gewindestabs umlaufenden Stabgewinde und einem mit dem Stabgewinde korrespondierenden Buchsengewinde eine zweite Haltekraft gegeben ist, die größer ist als die erste Haltekraft, sodass bei Aufbringung der externen Verschiebekraft eine Verschiebung des Gewindestabs zur Gewindebuchse vermieden ist und erst bei Aufbringung einer die zweite Haltekraft überschreitenden Verschiebekraft eine solche Verschiebung ermöglicht ist. In einer Ausführungsform führt das Aufbringen einer solchen, die zweite Haltekraft überschreitenden Verschiebekraft zwingend zu einer Beschädigung der Montageeinrichtung. Die erste Haltekraft kann weniger als 50 %, insbesondere weniger als 30 %, insbesondere weniger als 20 % der zweiten Haltekraft betragen. Die Verschiebekraft wird extern aufgebracht, womit ausgeschlossen ist, dass die Verschiebekraft lediglich durch Kräfte der statischen Wirkverbindung der Abschnitte und/oder Komponenten und/oder Elemente der Montageeinrichtung gebildet ist. Die Kräfte der statischen Wirkverbindung können Schnittkräfte sein und/oder durch Eigenspannungen hervorgerufen sein. Die externe Verschiebekraft ist insbesondere durch eine Körperkraft eines Menschen aufbringbar. Insbesondere ist die externe Verschiebekraft durch Hilfsvorrichtungen aufbringbar.

In dem Montagezustand und im Haltezustand liegen Gewindebuchse und Gewindestab mit den zueinander korrespondierenden Halteflächen aneinander an. Im Montagezustand liegen Gewindebuchse und Gewindestab dabei mit ersten zueinander korrespondierend ausgebildeten Halteflächen aneinander an. Der Gewindestab weist eine erste Haltefläche des Gewindestabs auf und die Gewindebuchse weist eine erste Haltefläche der Gewindebuchse auf, wobei beide ersten Halteflächen zueinander korrespondieren und aneinander anliegen. Bevorzugt weist zumindest eine der ersten Halteflächen zumindest einen Abschnitt des Buchsengewindes oder des Stabgewindes auf, wobei diese erste Haltefläche insbesondere mit Gewindestegen des Buchsengewindes oder des Stabgewindes an der anderen ersten Haltefläche anliegt. Besonders bevorzugt weist die von dem Gewindestab ausgebildete erste Haltefläche einen Abschnitt des Gewindestabs auf und die von der Gewindebuchse ausgebildete erste Halteflächen einen Abschnitt des Buchsengewindes auf, wobei in dem Montagezustand innerhalb dieses Abschnitts die Gewinde mit ihren Gewindestegen aneinander anliegen. Im Haltezustand liegen Gewindebuchse und Gewindestab mit zweiten zueinander korrespondierend ausgebildeten Halteflächen an. Das Paar an korrespondierenden ersten Halteflächen im Montagezustand unterscheidet sich von dem Paar an korrespondierenden zweiten Halteflächen im Haltezustand, indem sich zumindest die erste Haltefläche der Gewindebuchse von der zweiten Haltefläche der Gewindebuchse unterscheidet. Bevorzugt unterscheiden sich sämtliche erste Halteflächen von sämtlichen zweiten Halteflächen, wobei vorgesehen sein kann, dass eine der ersten Halteflächen einen Teil einer der zweiten Halteflächen ausbildet. Ausgehend von dem der Haltezustand dadurch herstellbar, dass der Gewindestab und die Gewindebuchse von der Anlage der ersten Halteflächen zueinander zu der Anlage der zweiten Halteflächen zueinander bringbar sind. Die Gewindebuchse weist zumindest zwei, insbesondere genau zwei, Abschnitte auf, die sich über einen selben Längsabschnitt der Gewindebuchse erstrecken. Der Längsabschnitt ist ein Abschnitt der Gewindebuchse, der im Montagezustand oder Haltezustand einem Abschnitt der Erstreckung der Gewindebuchse in Längsrichtung entspricht. Die zumindest zwei Abschnitte können sich vollständig über denselben Längsabschnitt erstrecken. Bevorzugt ist das Buchsengewinde und/oder ist die zweite Haltefläche und/oder die erste Haltefläche der Gewindebuchse durch die Abschnitte ausgebildet, wobei zumindest einer der Abschnitte, insbesondere die Abschnitte, das Buchsengewinde ausbildet bzw. ausbilden. Insbesondere erstrecken sich die Abschnitte im Montagezustand und/oder Haltezustand parallel zu der Längserstreckung des Gewindestabes. Vorzugsweise sind die zumindest zwei Abschnitte im Montagezustand und/oder Haltezustand senkrecht zur Längsrichtung voneinander beabstandet, insbesondere einander gegenüberliegend, angeordnet und von der Längsachse des Gewindestabs beabstandet sowie insbesondere zu der Längsachse exzentrisch angeordnet. Bevorzugt sind sie im Montagezustand und/oder Haltezustand umfänglich um den Gewindestab verteilt. Erfindungsgemäß bilden die zumindest zwei Abschnitte die zweite Haltefläche der Gewindebuchse sowie die erste Haltefläche der Gewindebuchse aus. Die zumindest zwei Abschnitte sind zudem entlang einer Senkrechten zur Längsrichtung relativ zueinander beweglich.

Zum Verändern der zueinander korrespondierenden Halteflächen, mit denen Gewindestab und Gewindebuchse aneinander anliegen, sind die zumindest zwei Abschnitte zueinander bewegbar. Insbesondere können die zwei Abschnitte gegenüber ihrer Relativposition im Montagezustand im Haltezustand einen geringeren Abstand zueinander senkrecht zur Längsachse aufweisen. Die Bewegung der Abschnitte zwischen Montagezustand und Haltezustand erfolgt bevorzugt durchgehend. Insbesondere vergrößert sich gegenüber dem Montagezustand ein Eingriffsvolumen, mit welchem der Gewindestab und die Gewindebuchse im Haltezustand ineinandergreifen. Bevorzugt erhöht sich gegenüber dem Montagezustand im Haltezustand der Anteil der Haltefläche des einen Bauteils (Gewindebuchse oder Gewindestab), die senkrecht zu Längsrichtung an der korrespondierenden Haltefläche des anderen Bauteils (Gewindestab oder Gewindebuchse) anliegt. Bevorzugt ist das Buchsengewinde in Form eines Innengewindes ausgebildet. Vorteilhafterweise weist insbesondere in einem solchen Falle der Gewindestab das Stabgewinde in Form eines Außengewindes auf. Der Gewindestab kann aus Metall hergestellt sein. Der Gewindestab und/oder die Gewindebuchse kann aus Kunststoff, insbesondere aus thermoplastischem Kunststoff hergestellt sein. Die Gewindebuchse kann mehrteilig ausgeführt sein. Die Gewindebuchse umfasst vorzugsweise weniger als zehn, besonders bevorzugt weniger als fünf Teile. Als Teile werden in diesem Kontext sowie allgemein für den Fachmann ersichtlich Elemente bezeichnet, die getrennte Bauteile sind, welche insbesondere in einer Baugruppe angeordnet sein können. Die Gewindebuchse kann ausschließlich Kunststoffteile umfassen. Der Gewindestab kann einteilig ausgeführt sein. Der Gewindestab kann ein Kopfelement zur Anlage an der Abdeckplatte aufweisen. Die zumindest zwei Abschnitte weisen bevorzugt eine geringere Erstreckung in Längsrichtung auf als die Gewindebuchse, bevorzugt weniger als 70 %, bevorzugt weniger als 50 % der Längserstreckungslänge der Gewindebuchse. Die Montageeinrichtung ist bevorzugt reversibel von dem Montagezustand in den Haltezustand und vom Haltezustand zurück in den Montagezustand bringbar. Bevorzugt ist der Gewindestab ausgehend von dem Haltezustand durch Rotation um seine Längsachse in Längsrichtung zu der Gewindebuchse bewegbar, indem Stabgewinde und Buchsengewinde ineinandergreifen, wobei bevorzugt die Rotation um mehr als 270°, insbesondere mehr als 360°, insbesondere um ein Vielfaches von 360° erfolgen kann. Hierdurch kann bei bestimmungsgemäßer Verwendung der Montageeinrichtung im Verlauf der Rotation eine sich erhöhende Presskraft auf die Abdeckplatte aufgebracht werden, mit der sie gegen eine Vorwand gepresst wird. Die erfindungsgemäße Montageeinrichtung kann in Ausführungen Merkmale aufweisen, die oben im Zusammenhang mit gattungsgemäßen Montageeinrichtungen erläutert sind.

Die erfindungsgemäße Montageeinrichtung bringt eine Vielzahl an Vorteilen im Vergleich zu gattungsgemäßen Montageeinrichtungen mit sich. Durch die erfindungsgemäße Montageeinrichtung ist es ermöglicht, die Abdeckplatte erheblich schneller an der Unterputzeinheit, insbesondere an der Wandung des Spülkastens, zu befestigen, bzw. diese von der Unterputzeinheit zu lösen. Zur Befestigung und zum Lösen sind bevorzugt keine zusätzlichen Getriebeelemente zu betätigen. Der Gewindestab ist bei der Fixierung besonders schnell und einfach auf die Länge, die insbesondere einem erforderlichen Abstand zwischen Abdeckplatte und Unterputzeinheit entspricht, bringbar, der insbesondere über den Abstand der Wandung von der Raumseite der Vorwand festgelegt ist. Im Montagezustand kann eine Relativpositionierung von Gewindestab und Gewindebuchse bereits durch ein rotationsfreies Verschieben zueinander erfolgen. Die Fixierung kann zudem im Haltezustand bevorzugt mittels besonders geringem Verdrehwinkel erfolgen. Gleichzeitig ermöglicht die erfindungsgemäße Montageeinrichtung die zumindest ebenso sichere Fixierung wie gattungsgemäße Montageeinrichtungen. Somit ist mit der erfindungsgemäßen Montageeinrichtung eine sehr einfache und wenig fehleranfällige Fixierung möglich. Gegenüber gattungsgemäßen Montageeinrichtungen zeichnet sich der erfindungsgemäße Gegenstand durch eine geringe Anzahl an erforderlichen Bauteilen aus, die zudem kostengünstig herstellbar sind. Die erfindungsgemäße Montageeinrichtung kann somit kostengünstiger hergestellt und installiert werden als gattungsgemäße Montageeinrichtungen. Die Herstellung der Bauteile kann in gut skalierbaren, bewährten Fertigungsverfahren erfolgen. Zudem ist die Funktion der Montageeinrichtung bereits dann gewährleistet, wenn alle Komponenten aus dem gleichen Material hergestellt sind. Die Montageeinrichtung bietet zudem den Vorteil einer platzsparenden Montage des Spülkastens in der Vorwand, wodurch ein besonders geringer Abstand der Vorwand von der Wand erforderlich ist. Dadurch können Wartungsvorgänge vereinfacht und beschleunigt werden und Ausfallzeiten der jeweiligen Sanitäreinrichtungen maßgeblich verringert werden. Die Befestigung mittels der Montageeinrichtung kann ohne spezielle Werkzeuge erfolgen und von ungeschultem Personal durchgeführt werden. Durch den einfachen Aufbau der Montageeinrichtung ist diese besonders ausfallsicher. Sollten dennoch verschleißbedingte Defekte auftreten, ist ein einfacher Austausch der betroffenen Komponenten möglich.

In einer vorteilhaften Ausführungsform ist die Gewindebuchse mehrteilig ausgeführt. Dabei sind die Abschnitte der Gewindebuchse durch einen ersten Buchsenteil ausgebildet, wobei die Gewindebuchse einen zweiten Buchsenteil aufweist, der als Fixierabschnitt ausgebildet ist. Der erste Buchsenteil ist in der vorteilhaften Ausführungsform innerhalb eines, insbesondere vordefinierten, Längserstreckungsbereiches relativ zum Fixierteil beweglich. Der Längserstreckungsbereich ist ein Bereich innerhalb der Erstreckung der Gewindebuchse in Längsrichtung. Vorzugsweise weist die Gewindebuchse an den jeweiligen Grenzen des Längserstreckungsbereichs in Längsrichtung Mittel zu Beschränkung der Beweglichkeit des ersten Buchsenteils relativ zum Fixierteil auf. Innerhalb des Längserstreckungsbereichs ist der erste Buchsenteil relativ zum Fixierteil über eine Bewegungsstrecke hinweg beweglich. Die Bewegungsstrecke ist eine durch eine Bewegung zurücklegbare, zwischen einer Ausgangslage und einer Endlage definierte Strecke. Die Bewegungsstrecke kann eine Strecke entlang einer Drehbewegung, insbesondere entlang einer Drehbewegung um die Längsachse, insbesondere des ersten Buchsenteils relativ zum Fixierteil sein. Die Drehbewegung kann durch eine weitere Bewegungskomponente der Abschnitte relativ zueinander überlagert sein. Der erste Buchsenteil kann innerhalb des Längserstreckungsbereiches sich verjüngend ausgebildet sein. Der Fixierteil kann zumindest in einem Abschnitt sich verjüngend ausgeführt sein. Bevorzugt können sowohl Fixierteil als auch der erste Buchsenteil sich verjüngend ausgebildet sein, wobei besonders bevorzugt der erste Buchsenteil und der Fixierteil jeweils einen Verjüngungswinkel, d.h. einen Winkel seiner Oberfläche zur Längsachse, aufweisen, der sich von dem jeweils anderen Verjüngungswinkel unterscheidet. Besonders bevorzugt weist der Fixierabschnitt einen größeren Verjüngungswinkel auf als der erste Buchsenteil, wobei sich beide Verjüngungswinkel auf die Längsachse beziehen. Vorzugsweise kann der erste Buchsenteil und/oder der Fixierteil dergestalt verjüngend ausgebildet sein, dass der jeweilige Verjüngungswinkel insbesondere entlang des jeweiligen Umfangs seiner Oberfläche konstant ist. Alternativ kann sich der jeweilige Verjüngungswinkel entlang des jeweiligen Umfangs ändern. Besonders bevorzugt weist der erste Buchsenteil und/oder der Fixierteil innerhalb des Längserstreckungsbereiches entlang der Bewegungsstrecke einen sich kontinuierlich veränderlichen Verjüngungswinkel auf. Die sich verjüngende Ausbildung kann abgestuft sein, wobei innerhalb des verjüngend ausgebildeten Bereichs abschnittsweise Verjüngungswinkel zwischen vorzugsweise 0 ° und 90 ° möglich sind. Bevorzugt liegt der erste Buchsenteil in jeder Position entlang der Bewegungsstrecke mit einer senkrecht zur Längsrichtung wirkenden Presskraft an einer Pressfläche des Fixierteils angepresst an. Die Pressfläche kann durch Pressflächenabschnitte ausgebildet sein, welche insbesondere voneinander beabstandet sind. Die Presskraft kann eine Kraftkomponente in Längsrichtung aufweisen, so dass die resultierende Presskraft in einem Winkel zwischen der Längsachse und einer Ebene senkrecht zur Längsachse liegt. Die Anlage des ersten Buchsenteils, insbesondere der Abschnitte des ersten Buchsenteils, an der Pressfläche des Fixierteils legt bevorzugt die Relativposition der Abschnitte, insbesondere in einer Richtung senkrecht zur Längsachse, zueinander fest. Die Relativposition der Abschnitte, wenn sich der erste Buchsenteil in Anlage mit der Pressfläche des Fixierteils befindet, kann sich von einer Relativlage der Abschnitte zueinander, in welcher kein Kontakt mit dem Fixierteil vorliegt, unterscheiden. Die Festlegung der Relativposition der Abschnitte zueinander durch die Anlage des ersten Buchsenteils an dem Fixierteil erfolgt unter Ausbildung der Presskraft. Eine Bewegung des ersten Buchsenteils relativ zum Fixierteil entlang einer vorbestimmten Bewegungsrichtung innerhalb der Bewegungsstrecke innerhalb des Längserstreckungsbereiches verändert direkt die Relativposition der Abschnitte des Buchsenteils zueinander. Insbesondere erfolgt die Veränderung der Relativposition der Abschnitte kontinuierlich, besonders bevorzugt stetig und vorzugsweise direkt proportional zum Verlauf der Bewegungsstrecke, entlang der Bewegungsstrecke.

Erfindungsgemäß sind die Abschnitte durch eine elastische Verbindung miteinander verbunden. Die elastische Verbindung bezeichnet hier, dass Verbindungsmittel zur Verbindung der Abschnitte mit den Abschnitten verbunden sind, insbesondere einstückig verbunden sind, welche elastische Materialeigenschaften aufweisen. Elastische Materialeigenschaften umfassen im Speziellen die Eigenschaft, unter Einwirkung einer externen Kraft ausgehend von einer Ausgangslage unter Ausbildung einer Rückstellkraft eine reversible Verformung ausführen zu können. Die Rückstellkraft ist abhängig von der, insbesondere proportional zur Verformung. Die Verformung kann durch die Rückstellkraft bei einem Wegfall der externen Kraft rückgebildet werden. Diese reversible Verformung kann mit einer Hysterese behaftet sein, sodass eine Rückbildung ausgehend von der Verformung in die Ausgangslage mit einer Differenz gegenüber der ursprünglichen Ausgangslage erfolgt. Die Ausgangslage entspricht hier dem Montagezustand. Die maximale vorgesehene Verformung liegt insbesondere im Haltezustand vor. Bevorzugt ist die elastische Verbindung dergestalt vorgesehen, dass bei einer Auslenkung ausgehend von dem Montagezustand bis zum Erreichen des Haltezustands, bezogen auf die in den Zuständen jeweils vorliegende Form des ersten Buchsenteils, die Rückstellkraft bei Aufhebung sämtlicher auf die Abschnitte wirkender Kräfte eine Rückkehr in den Montagezustand bewirkt. Bevorzugt ist der erste Buchsenteil umfassend die Abschnitte und die elastische Verbindung einstückig ausgebildet, insbesondere einstückig aus Kunststoff, insbesondere durch Spritzguss, hergestellt. In einer Ausführungsform umfasst die elastische Verbindung ein von den Abschnitten separat hergestelltes Verbindungselement, das mit den Abschnitten anschließend verbunden wird, wobei beispielsweise die elastische Verbindung einen elastischen Ring umfasst, der über die Abschnitte gestreift ist. Eine Bewegung der Abschnitte zueinander, welche senkrecht zur Längsrichtung erfolgt, resultiert in der Ausbildung der Rückstellkraft. Die Bewegung kann sich aus der Bewegung des ersten Buchsenteils relativ zum Fixierteil innerhalb einer vorbestimmten Bewegungsrichtung entlang der Bewegungsstrecke ergeben. Die elastische Verbindung zwischen den Abschnitten wirkt einer Bewegung senkrecht zur Längsrichtung der Abschnitte zueinander, ausgehend von dem Montagezustand zu dem Haltezustand hin, unter Ausbildung der Rückstellkraft entgegen. Die Verbindung kann durch zumindest einen elastischen Steg ausgebildet sein, der senkrecht zur Längsrichtung verläuft. Der zumindest eine elastische Steg kann anteilig in Längsrichtung verlaufen. Der zumindest eine elastische Steg kann senkrecht zur Längsrichtung eine größere Erstreckung aufweisen als in Längsrichtung. Die Erstreckung des zumindest einen elastischen Stegs in Längsrichtung kann über weniger als 30 %, bevorzugt weniger als 20 %, besonders bevorzugt über weniger als 10 % der Längserstreckung der Abschnitte verlaufen, die er verbindet. Insbesondere ist der Querschnitt des zumindest einen Stegs kleiner als seine Länge. Besonders bevorzugt beträgt der Querschnitt weniger als die Hälfte, insbesondere weniger als ein Drittel der Länge des Stegs. Insbesondere kann die Erstreckung des elastischen Stegs in Längsrichtung abschnittsweise unterbrochen sein, wobei mehrere in Längsrichtung beabstandete Stegsegmente ausgebildet sind. Insbesondere ist die elastische Verbindung, besonders bevorzugt der bzw. die elastischen Stege, im Montagezustand von der Pressfläche beabstandet. Bevorzugt ist der zumindest eine Steg mit zumindest einem der Abschnitte einstückig ausgebildet. Vorzugsweise ist die elastische Verbindung außerhalb des Mittelpunktes der zwei Abschnitte angeordnet. Bevorzugt ist die elastische Verbindung in Längsrichtung von dem Mittelpunkt eines jeden der zumindest zwei Abschnitte beabstandet. Bevorzugt ist die elastische Verbindung in einem Bereich der Abschnitte angeordnet, welcher auf einer von dem verjüngend ausgebildeten Bereich abgewandten Seite liegt. Die Abschnitte sind insbesondere derart zueinander bewegbar, dass die Abschnitte um eine Kippachse, welche im Wesentlichen senkrecht zur Längsachse verläuft, relativ zu einander verkippbar sind. Eine Verkippung führt zu einer Veränderung des Winkels zwischen den, insbesondere gegenüberliegenden Abschnitten um die Kippachse. Die Abschnitte sind insbesondere dann zueinander im Vergleich zu ihrer Lage in dem Montagezustand verkippt, wenn der erste Buchsenteil in Anlage mit der Pressfläche des Fixierabschnitts ist. Bevorzugt ist die elastische Verbindung durch zumindest zwei Stege ausgebildet, wobei jeder der Stege eine Auswahl von den oben mit Bezug auf einen Steg erläuterten Eigenschaften aufweisen kann.

In einer weiteren vorteilhaften Ausführungsform liegt der erste Buchsenteil im Haltezustand zumindest abschnittsweise, insbesondere mit einem seiner Abschnitte, an einer Anschlagfläche an. Der Fixierteil weist die Anschlagfläche auf. Die Anschlagfläche begrenzt die Beweglichkeit des ersten Buchsenteils relativ zum Fixierteil, insbesondere entlang der Bewegungsstrecke. Die Beweglichkeit wird insbesondere in einer Bewegungsrichtung entlang der Bewegungsstrecke, insbesondere in der Bewegungsrichtung vom Montagezustand zum Haltezustand, begrenzt, während vorzugsweise eine Bewegung in die entgegengesetzte Bewegungsrichtung unbegrenzt ist. Durch die begrenzte Beweglichkeit des ersten Buchsteils zum Fixierteil ist die Beweglichkeit der Abschnitte des ersten Buchsenteils begrenzt. Insbesondere ist eine Verdrehung des ersten Buchsenteils relativ zum Fixierteil begrenzt, wenn der erste Buchsenteil an der Pressfläche des Fixierteils anliegt. Vorzugsweise ist zumindest eine Drehbewegung entlang der Längsachse unbegrenzt, wenn der erste Buchsenteil nicht an der Anschlagfläche anliegt und/oder insbesondere in einer Längsrichtung von der Anschlagfläche und/oder senkrecht zur Längsrichtung von dem Fixierteil beabstandet ist. Vorzugsweise ist eine Begrenzung der Beweglichkeit durch die Anschlagfläche lediglich im Haltezustand gegeben.

Die Anschlagfläche kann Teil der Pressfläche sein, insbesondere dann, wenn die Pressfläche einen veränderlichen Abstand zur Längsachse aufweist. Der erste Buchsenteil kann eine zur Anschlagfläche korrespondierende erste Gegenfläche ausbilden. Die Anschlagfläche kann sich funktionell aus mehreren Flächen zusammensetzen, welche gemeinsam eine Anschlagwirkung haben. Die Anschlagwirkung begrenzt die Beweglichkeit des ersten Buchsenteils relativ zum Fixierteil. Vorzugsweise ist der erste Buchsenteil, insbesondere die Abschnitte, besonders bevorzugt eine korrespondierend zur Anschlagfläche durch zumindest einen der Abschnitte ausgebildete Fläche, im Haltezustand mit der Anschlagfläche in Anlage. Insbesondere ist der erste Buchsenteil in dem Montagezustand von der Anschlagfläche beabstandet. Vorzugsweise ist der erste Buchsenteil ausgehend vom Montagezustand durch eine Verschiebebewegung relativ zum Fixierteil in Anlage mit der Anschlagfläche bringbar. Die Verschiebebewegung verläuft insbesondere entlang der Bewegungsstrecke ausgehend vom Montagezustand in Richtung zum Haltezustand, wobei die Verschiebebewegung vorzugsweise eine kontinuierliche Bewegung ist. Die Verschiebebewegung kann eine durchgehende Bewegung sein.

Ausgehend von dem Montagezustand kann durch die Verschiebebewegung der Haltezustand erzeugt werden, wobei in dem Haltezustand insbesondere der erste Buchsenteil an der Anschlagfläche anliegt. Insbesondere liegt die Anschlagfläche außerhalb der Pressfläche. Bevorzugt erstreckt sich die Anschlagfläche ausschließlich außerhalb der Pressfläche. Bevorzugt erstreckt sich die Anschlagfläche entlang eines größeren Abstandes von der Längsachse als ein der Längsachse nächster Punkt der Pressfläche. Vorzugsweise liegt der erste Buchsenteil im Haltezustand zumindest mit einer Linienberührung, insbesondere mit einer Flächenberührung an der Anschlagfläche an. Die Anschlagfläche kann in einem Bereich in Längsrichtung angeordnet sein, in dem der Fixierteil sich verjüngend ausgebildet ist. Vorzugsweise erstreckt sich die Anschlagfläche überwiegend senkrecht zur Längsrichtung. Die Flächennormale der Anschlagfläche kann einen Winkel von >0 °, insbesondere >30 ° bezogen auf den Flächenabschnitt der Pressfläche aufweisen, über den im Haltezustand mehr als 50 %, insbesondere mehr als 70 % der Presskraft aufgebracht wird. Vorzugsweise liegt der erste Buchsenteil im Haltezustand mit der ersten Gegenfläche an einer senkrecht zur Längsrichtung verlaufenden zweiten Gegenfläche des Fixierteils an. Die Flächennormale der ersten Gegenfläche kann dabei in eine bestimmte Richtung weisen. Insbesondere sind die Flächennormale der ersten Gegenfläche und der zweiten Gegenfläche im Haltezustand parallel zueinander angeordnet. Vorzugsweise ist die elastische Verbindung näher an dem Längsende des ersten Buchsenteils, bzw. der Abschnitte angeordnet, welches auf der von den Gegenfläche in Längsrichtung abgewandten Seite liegt. Insbesondere kann die Anschlagfläche in bestimmen Ausführungsformen als Funktionselement mit Rast- und/oder Hemmeigenschaften ausgebildet sein. Das Funktionselement kann ein elastisches Element umfassen, welches insbesondere seine Rückstellkraft beim Eingriff mit der jeweiligen Gegenfläche abbaut.

In einer weiteren vorteilhaften Ausführungsform umfasst die Verschiebebewegung, durch die der erste Buchsenteil ausgehend vom Montagezustand relativ zum Fixierteil in Anlage mit der Anschlagfläche des Fixierteils bringbar ist, eine Drehbewegung. Die Drehbewegung erfolgt um eine entlang einer in Längsrichtung verlaufenden Drehachse. Die Drehachse kann der Längsachse entsprechen. Die Drehachse kann um einen Winkel, insbesondere von <20 °, insbesondere <5 °, von der Längsachse abweichen, wobei sich der Winkel auf eine Verdrehung ausgehend von der Längsachse um eine Achse, welche senkrecht zur Längsachse verläuft, bezieht. Die Verschiebebewegung kann weitere Bewegungskomponenten umfassen, die der Drehbewegung um die Drehachse in Längsrichtung nicht entsprechen und insbesondere translatorisch sind. Der erste Buchsenteil und der Fixierteil sind bevorzugt dergestalt korrespondierend zueinander ausgebildet, dass ausgehend von dem Montagezustand der Haltezustand durch Ausführen der Drehbewegung um einen definierten Drehwinkel erreichbar ist. Der Drehwinkel bezieht sich auf einen Winkel, um dessen Betrag der erste Buchsenteil relativ zum Fixierabschnitt zum Erreichen des Haltezustands, ausgehend von einer Lage, in der sich die Montageeinrichtung im Montagezustand befindet, drehbar ist. Der Drehwinkel bezieht sich insbesondere auf einen Drehbewegungsanteil der Drehbewegung, welcher um die Längsachse verläuft. Der Drehwinkel beträgt insbesondere weniger als 270 °, bevorzugt weniger als 180 °**.** Insbesondere liegt der Drehwinkel innerhalb eines Bereichs von 30 ° und 270 °, bevorzugt in einem Bereich von 30 ° und 180 °**.** Die Drehbewegung kann eine Spiralbewegung sein, bei der sich eine Rotation und eine Bewegung der Abschnitte zueinander dergestalt überlagern, dass die Bewegungsstrecke entlang einer ebenen Spirale verläuft. Die Spiralbewegung kann mit einen kontinuierlich, insbesondere durchgehend, bevorzugt ununterbrochenen Verlauf vorgesehen sein. Allgemein können weitere Drehbewegungen möglich sein, welche bezüglich ihres Drehwinkels unbegrenzt sind, wobei die zwei Abschnitte bei Ausführung dieser weiteren Drehbewegungen zwischen erstem und Fixierteil nicht an der Pressfläche anliegen.

In einer Ausführungsform weist die Gewindebuchse eine Verdrehsicherung auf, die ein Verdrehen des Fixierteils und des ersten Buchsenteils zueinander verhindert, wobei das Verdrehen um eine Achse, welche insbesondere der Längsachse entspricht, zumindest aber entlang der Längsachse verläuft, verhindert wird. Die Verdrehsicherung verhindert ein Verdrehen zumindest in einer Richtung um die Längsachse, insbesondere in beiden Richtungen um die Längsachse. Bevorzugt weist der erste Buchsenteil einen für die Verdrehsicherung funktionsrelevanten Teil der Verdrehsicherung, insbesondere die Verdrehsicherung, auf. In einer Ausführung, in der die Verdrehsicherung durch den ersten Buchsenteil ausgebildet wird, kann der Fixierteil einen zur Verdrehsicherung korrespondierenden Bereich aufweisen. Die Verdrehsicherung ist bevorzugt im Haltezustand, insbesondere außerdem im Montagezustand, in Anlage mit einer korrespondierenden Fläche und/oder Kante, welche von dem ersten oder zweiten Buchsenteil ausgebildet wird, welches nicht die Verdrehsicherung aufweist. Insbesondere ist die Verdrehsicherung zumindest entlang eines Viertels, insbesondere entlang des gesamten Längserstreckungsbereiches des ersten Buchsenteils ausgebildet. Insbesondere ist der erste Buchsenteil mit dem korrespondierend ausgebildeten Bereich in jedem Zustand mit der Verdrehsicherung im Eingriff. Insbesondere ist die Verdrehsicherung dergestalt ausgebildet, dass der korrespondierend ausgebildete Bereich in der Verdrehsicherung entlang der Längsrichtung geführt ist. Insbesondere kann die Verdrehsicherung als Nut ausgeführt sein, in die der korrespondierend ausgebildete Bereich eingreift. Insbesondere kann die Verdrehsicherung derart ausgeführt sein, dass ein Verdrehen um die Achse innerhalb eines definierten Winkelbereichs zugelassen wird und ein Überschreiten des Winkelbereichs durch Begrenzungsmittel verhindert wird.

In einer Ausführungsform ist die Montageeinrichtung ausgehend von dem Haltezustand durch Aufbringen einer Lösekraft auf den ersten Buchsenteil relativ zum Fixierteil bewegbar und insbesondere von dem Haltezustand in den Montagezustand bringbar gestaltet. Somit ist die Montageeinrichtung durch Aufbringen einer Lösekraft aus dem Haltezustand lösbar. Die Lösekraft ist über den Gewindestab relativ zum Fixierteil einleitbar. Die Lösekraft ist als externe Kraft aufprägbar. Die externe Kraft kann als Drehmoment insbesondere auf den Gewindestab aufprägbar und über einen definierten Radius in eine Lösekraft übersetzbar sein, sodass die Lösekraft durch eine Drehbewegung des Gewindestabs relativ zum Fixierteil aufbringbar ist. Insbesondere ist ausgehend von dem Haltezustand eine Relativbewegung zwischen erstem Buchsenteil und Fixierteil erzeugbar, indem eine Lösekraft aufgeprägt wird, wobei die Lösekraft eine erste Mindestkraft überschreitet. Die erste Mindestkraft entspricht einer Summe an Haltekraftkomponenten, die entgegen der Lösekraft wirksam sind und insbesondere eine Haftreibungskraft zwischen erstem Buchsenteil und Fixierteil umfasst. Die Haftreibungskraft ist eine Reibkraft, welche überwunden werden muss, um ausgehend von einer Ruhelage eine Relativbewegung von erstem Buchsenteil und Fixierteil zu erzeugen. Zum Lösen des Haltezustandes durch Aufbringung der Lösekraft ist vorzugsweise der erste Buchsenteil von dem Fixierabschnitt lösbar, wobei insbesondere der erste Buchsenabschnitt und der Gewindestab während des Lösens keine relative Bewegung zueinander durchführen. Insbesondere ist der Gewindestab mit der Bewegung des ersten Buchsenteils ausgehend von dem Haltezustand in den Montagezustand mitbewegbar. Ausgehend von dem Haltezustand ist die Kraft zum Erzeugen einer Relativbewegung zwischen erstem Buchsenteil und Fixierabschnitt bewusst geringer als zum Erzeugen einer Relativbewegung zwischen erstem Buchsenteil und Gewindestab. Insbesondere ist der Montagezustand ausgehend vom Haltezustand über ein Verdrehen des Gewindestabes relativ zum Fixierteil erreichbar, insbesondere ausschließlich durch ein Verdrehen. Allgemein ist der Gewindestab im Haltezustand vorzugsweise nicht relativ zum ersten Buchsenteil unter Beibehaltung des Haltezustands verschiebbar, ohne den Gewindestab um seine Längsachse relativ zu dem ersten Buchsenteil zu verdrehen. Bevorzugt ist ausgehend vom Haltezustand der erste Buchsenteil relativ zum Fixierteil entlang der Bewegungsstrecke, insbesondere mittels einer Drehbewegung, welche der Drehbewegung zur Bewegung vom Montagezustand in den Haltezustand entgegengerichtet ist, in den Montagezustand bewegbar. Bevorzugt entspricht der Winkel zwischen der Relativlage von erstem Buchsenteil und Fixierteil dem Drehwinkel der Drehbewegung, mittels der ausgehend von dem Montagezustand der Haltezustand erreichbar ist. Insbesondere ist der erste Buchsenabschnitt mittels einer der Verschiebebewegung entgegen gerichteten Rückverschiebebewegung relativ zu dem Fixierteil bewegbar, wobei die entgegengesetzte Rückverschiebebewegung eine Drehbewegung um eine entlang der Längsrichtung verlaufende Drehachse umfasst, wobei der Buchsenteil und der Fixierteil dergestalt zueinander korrespondierend ausgebildet sind, dass ausgehend von dem Haltezustand der Montagezustand durch Ausführen der Drehbewegung um einen definierten Drehwinkel erreichbar ist. Der definierte Drehwinkel beträgt insbesondere weniger als 270°, bevorzugt weniger als 180°. Besonders bevorzugt entspricht der Drehwinkel, um den die Drehbewegung zu Erreichen des Montagezustandes ausgehend vom Haltezustand zu erfolgen hat, dem Drehwinkel, um den die Drehbewegung zum Erreichen des Haltezustandes ausgehend vom Montagezustand ausführbar ist. Insbesondere ist der Haltezustand ausgehend vom Montagezustand durch ein Verdrehen des Gewindestabes relativ zum Fixierabschnitt erreichbar. Bevorzugt entspricht die Rückverschiebebewegung exakt einer Umkehr der Verschiebebewegung. Bevorzugt ist die Montageeinrichtung dazu ausgebildet, dass Verschiebebewegung und Rückverschiebebewegung beliebig oft reversibel nacheinander ausführbar sind. Allgemein ist bevorzugt die Montageeinrichtung dergestalt ausgebildet, dass zwischen Montagezustand und Haltezustand beliebig oft reversibel gewechselt werden kann.

In einer Ausführungsform bildet zumindest einer der Abschnitte des ersten Buchsenteils das Buchsengewinde aus. Insbesondere weist zumindest ein Abschnitt kein Buchsengewinde auf. Innerhalb des Längserstreckungsbereichs, in dem der erste Buchsenteil und/oder der Fixierteil sich verjüngend ausgebildet sind, verändert sich vorzugsweise die Gewindetiefe des Buchsengewindes entlang der Längsrichtung, d. h. in Abhängigkeit von der Längsrichtung. Insbesondere weist das Buchsengewinde an einem Ende seines Verlaufs entlang der Längsrichtung eine geringere Gewindetiefe auf als an einem in Längsrichtung gegenüberliegenden Ende. Vorzugsweise weist das Buchsengewinde in einem zweiten Bereich, welcher von der elastischen Verbindung zwischen den Abschnitten in Längsrichtung weiter beabstandet ist, eine größere Gewindetiefe auf, als in einem ersten Bereich, welcher von der elastischen Verbindung zwischen den Abschnitten in Längsrichtung weniger weit beabstandet ist, wobei bevorzugt die erste Haltefläche der Gewindebuchse im ersten Bereich liegt und die zweite Haltefläche der Gewindebuchse im zweiten Bereich liegt. Das Buchsengewinde kann abschnittweise eine konstante Gewindetiefe aufweisen. Allgemein kann das Buchsengewinde eine konstante Gewindesteigung aufweisen, welche insbesondere der Gewindesteigung des Stabgewindes entspricht. Insbesondere verändert sich die Gewindetiefe des Buchsengewindes entlang der Längsrichtung in dem Abschnitt des Längserstreckungsbereichs, in dem sich Fixierteil und erster Buchsenteil während ihrer Bewegung zueinander entlang der Bewegungsstrecke befinden.

In einer bevorzugten Ausführungsform ist die Gewindebuchse dergestalt ausgebildet, dass sie einen ersten Befestigungsabschnitt und einen zweiten Befestigungsabschnitt aufweist, die insbesondere zur Befestigung der Gewindebuchse an der Unterputzeinheit, insbesondere an einem Wandabschnitt der Unterputzeinheit, insbesondere an der Wandung des Spülkastens geeignet sind. Der Wandabschnitt ist dabei ein Abschnitt einer Wand, die von der Unterputzeinheit ausgebildet ist, beispielsweise durch einen plattenförmigen Abschnitt, wobei bevorzugt der Wandabschnitt entlang der Längsrichtung sowohl an seiner Vorderseite, von der aus die Gewindebuchse an dem Wandabschnitt fixierbar ist, als auch an seiner Rückseite jeweils an einen Hohlraum anschließt, damit zum einen durch den an der Vorderseite vorgesehenen Hohlraum der Gewindestab zur Gewindebuchse geführt werden kann und zum anderen durch den an der Rückseite vorgesehenen Hohlraum die Gewindebuchse leicht an dem Wandabschnitt fixierbar ist. Der erste und der zweite Befestigungsabschnitt sind zueinander direkt benachbart. Der erste Befestigungsabschnitt weist eine Erstreckungslänge in einer senkrecht zur Längsrichtung verlaufenden Erstreckungsrichtung auf, wobei diese Erstreckungslänge eine Erstreckungslänge des zweiten Befestigungsabschnitts in insbesondere der gleichen Erstreckungsrichtung unterschreitet. Der erste und der zweite Befestigungsabschnitt liegen jeweils an einem Ende ihrer Erstreckung in Längsrichtung unmittelbar aneinander an. Der zweite Befestigungsabschnitt bildet insbesondere ein Längsende der Gewindebuchse aus. Insbesondere bildet der erste Befestigungsabschnitt entlang der Längsrichtung einen konstanten Querschnitt aus. Bevorzugt bildet der erste Befestigungsabschnitt entlang der Längsrichtung einen bezogen auf die Längsachse symmetrischen, insbesondere rotationssymmetrischen Querschnitt aus. Bevorzugt bildet der zweite Befestigungsabschnitt eine Anlagefläche zur Anlage in Längsrichtung an dem Wandabschnitt der Unterputzeinheit, insbesondere an der Wandung des Spülkastens oder einem an der Wandung befestigten Abschnitt des Spülkastens, beispielsweise an der Spritzschutzplatte aus, welche sich insbesondere senkrecht zur Längsrichtung erstreckt. Die Anlagefläche kann einen oder mehrere Vorsprünge und/oder Ausnehmungen aufweisen, welche in Anlage mit korrespondierenden Flächen des Wandabschnitts bzw. der Wandung bzw. des Abschnitts des Spülkastens die Beweglichkeit der Gewindebuchse relativ zur Wandung des Spülkastens, insbesondere eine Drehbeweglichkeit um die Längsachse von Gewindebuchse und Wandung relativ zu einander, hemmen oder sperren. Vorzugsweise wirkt, wenn die Gewindebuchse in die Wandung, bzw. den Abschnitt des Spülkastens eingefügt ist, eine Andrückkraft zwischen zumindest einem Befestigungsabschnitt und dem Wandabschnitt bzw. der Wandung. Die Andrückkraft kann weiterhin eine Reibkraft zwischen der Anlagefläche und dem Wandabschnitt bzw. der Wandung bzw. des Abschnitts des Spülkastens erzeugen, die eine Drehbeweglichkeit um die Längsachse von Gewindebuchse und Wandung relativ zu einander hemmt. Bevorzugt grenzt der erste Befestigungsabschnitt an einem Ende, insbesondere an beiden Enden seiner Erstreckung in Längsrichtung an einen Abschnitt, dessen Erstreckung senkrecht zur Längsrichtung er unterschreitet. Besonders bevorzugt ist der erste Befestigungsabschnitt entlang der Längsrichtung zwischen dem zweiten und einem dritten Befestigungsabschnitt angeordnet, wobei der zweite Befestigungsabschnitt die Anlagefläche aufweist und der dritte Befestigungsabschnitt eine weitere Anlagefläche zur Anlage an dem Wandabschnitt der Unterputzeinheit bzw. der Wandung des Spülkastens aufweist. Vorzugsweise wirkt, wenn die Gewindebuchse in die Wandung, bzw. den Abschnitt des Spülkastens eingefügt ist, die Andrückkraft zwischen der Anlagefläche des zweiten Befestigungsabschnitts und dem Wandabschnitt bzw. der Wandung bzw. dem Flächenabschnitt, und der Anlagefläche des dritten Befestigungsabschnitts und dem Wandabschnitt bzw. der Wandung bzw. dem Abschnitt. Der dritte Befestigungsabschnitt kann an dem der zweiten Anlagefläche in Längsrichtung gegenüberliegenden Ende der Gewindebuchse ein Längsende der Gewindebuchse, insbesondere des Fixierteils der Gewindebuchse, ausbilden.

Die Montageeinrichtung kann in einer Ausführung als Teil eines Sets vorgesehen sein, umfassend die Montageeinrichtung, eine Unterputzeinheit, insbesondere einen Spülkasten, und eine Abdeckplatte, insbesondere eine Betätigungsplatte zur Betätigung des Spülkastens, wobei die Abdeckplatte eine Einrichtung zur Befestigung des Gewindestabs, insbesondere zumindest eine Aussparung zur Durchführung des Gewindestabs in der Richtung seiner Längsachse durch die Abdeckplatte aufweist. Der Gewindestab ist bevorzugt zur Anlage in Längsrichtung mit einer Anlagefläche, welche sich quer zur Längsrichtung erstreckt, an einer korrespondierenden Fläche der Betätigungsplatte anlegbar. Bevorzugt ist die Gewindebuchse entlang ihrer Längsachse durch einen Abschnitt der Unterputzeinheit, insbesondere den oben beschriebenen Wandabschnitt, insbesondere durch einen Abschnitt des Spülkastens, insbesondere der Wandung des Spülkastens, durchführbar und insbesondere mittels einer Verdrehbewegung um ihre Längsachse relativ zu der Unterputzeinheit, insbesondere formschlüssig befestigbar. Die vorzugsweise formschlüssige Befestigung ist insbesondere dadurch herstellbar, dass die Gewindebuchse mit der Anlagefläche des zweiten Befestigungsabschnitts, insbesondere außerdem mit der Anlagefläche des dritten Befestigungsabschnitts an dem Befestigungsabschnitt anlegbar ist. Dadurch ist eine Verschiebung der Gewindebuchse relativ zum Spülkasten, bzw. insbesondere zur Wandung des Spülkastens, entlang der Längsachse gesperrt.

In einer bevorzugten Ausführung ist der erste Buchsenteil der Gewindebuchse in dem Fixierteil angeordnet, sodass sich der Fixierteil um den ersten Buchsenteil erstreckt und insbesondere den vordefinierten Längserstreckungsbereich umschließt. Vorzugsweise ist der Fixierteil nach Art einer Hülse ausgebildet, wobei die Hülse als länglich entlang der Längsrichtung gestreckter Hohlkörper ausgeführt ist, welcher zumindest im Montage- und Haltezustand den ersten Buchsenteil zumindest in einem Bereich, welcher von der Längsachse quer zur Längsrichtung beabstandet ist und dabei insbesondere zumindest in einem Abstand, welcher der Ausdehnung des Gewindestabs quer zur Längsrichtung entspricht, von der Längsachse beabstandet ist, vollständig umschließt. Der Fixierteil kann einen, insbesondere symmetrisch um die Längsachse angeordneten Aufnahmeraum für den ersten Buchsenteil ausbilden, wobei sich der Aufnahmeraum bevorzugt durchgehend und in Längsrichtung in einem Bereich, welcher die Längserstreckung des ersten Buchsenteils überschreitet, erstreckt und bevorzugt in Längsrichtung den ersten Buchsenteil einschließt. Der erste Buchsenteil ist vorzugsweise zumindest in dem Montage- und Haltezustand in dem Fixierteil angeordnet. Der erste Buchsenteil ist insbesondere bezogen auf seine Längsachse parallel zur Längsachse des Fixierteils ausgerichtet.

In einer bevorzugten Ausführung bilden Gewindestab und Gewindebuchse, insbesondere im Haltezustand, an den zueinander korrespondierenden Halteflächen Gewinde aus. Beide Gewinde weisen zumindest abschnittsweise, insbesondere zumindest im Haltezustand, Gewindestege auf. Die Gewindestege der Gewinde greifen im Haltezustand ineinander, sodass bezüglich der Längsrichtung ein Formschluss vorliegt. Insbesondere hintergreifen die Gewindestege bezogen auf die Längsrichtung einander. Insbesondere weisen die Gewindestege jeweils eine aktive und eine passive Gewindeflanke auf, welche sich beide überwiegend quer zur Längsrichtung erstrecken. Insbesondere liegen die aktiven Gewindeflanken im Haltezustand aneinander an. Insbesondere liegen die aktiven Gewindeflanken im Montagezustand über eine geringere Fläche aneinander an, als im Haltezustand. In der bevorzugten Ausführung greifen die Gewindestege im Haltezustand weiter ineinander als im Montagezustand. Insbesondere hintergreifen die Gewindestege im Haltezustand einander weiter als im Montagezustand. Vorzugsweise wird das Gewinde der Halteflächen der Gewindebuchse durch den ersten Buchsenteil ausgebildet. Bevorzugt erstreckt sich das Gewinde über die gesamte Längserstreckung des ersten Buchsenteils. Vorzugsweise greift das Gewinde des Gewindestabs im Montagezustand in einen ersten Gewindebereich des Gewindes des ersten Buchsenteils ein, welcher in Längsrichtung weiter von den Pressflächen, mit denen der Fixierteil im Haltezustand an dem ersten Buchsenteil angepresst anliegt, beabstandet ist, als ein zweiter Gewindebereich des Gewindes des ersten Buchsenteils. Vorzugsweise ist der zweite Gewindebereich in Längsrichtung weiter von den elastischen Verbindungen, insbesondere den elastischen Stegen, beabstandet als der erste Gewindebereich. Vorzugsweise weisen die Gewindestege des ersten Gewindebereichs eine geringere Erstreckung quer zur Längsrichtung auf als die Gewindestege des zweiten Gewindebereichs. Vorzugsweise weist der zweite Gewindebereich Gewindeflanken mit einer größeren Erstreckung quer zur Längsrichtung auf als der erste Gewindebereich. Vorzugsweise greift das Gewinde des Gewindestabs im Haltezustand in den zweiten Gewindebereich des Gewindes des ersten Buchsenteils ein. Vorzugsweise sind die Gewinde Normgewinde, insbesondere metrische Normgewinde, wobei insbesondere das Gewinde der Gewindebuchse bezüglich der Erstreckung des Gewindesteges quer zur Längsrichtung von den Vorgaben der Norm des Normgewindes abweicht.

In einer Ausführungsform weist die Gewindebuchse an jedem ihrer Längsenden jeweils eine Durchführungsöffnung auf. Bevorzugt weist die Gewindebuchse genau zwei Durchführungsöffnungen auf. Bevorzugt weist die jeweilige Durchführungsöffnung eine Durchführungsachse auf, welche durch die Durchführungsöffnung verläuft und insbesondere eine Symmetrieachse der Durchführungsöffnung darstellt, um die die Durchführungsöffnung vorzugsweise rotationssymmetrisch ausgebildet ist. Vorzugsweise sind die Durchführungsöffnungen zueinander dergestalt angeordnet, dass die Durchführungsachsen koaxial zueinander liegen. Bevorzugt sind die Durchführungsöffnungen dergestalt angeordnet, dass die Durchführungsachsen eine gemeinsame Durchgangsachse ausbilden, welche insbesondere in Längsrichtung, vorzugsweise entlang der Längsachse verläuft. Insbesondere verlaufen die Längsachse des Gewindestabes und die Durchführungsachsen in dem Haltezustand entlang einer gemeinsamen Achse, welche sich in Längsrichtung erstreckt. Zumindest eine Durchgangsöffnung ist im Haltezustand in Längsrichtung um mehr als 10 %, vorzugsweise mehr als 25 % der Längserstreckung des Buchsengewindes oder insbesondere des ersten Buchsenteils beabstandet. Insbesondere erstrecken sich die Durchgangsöffnungen quer zu ihrer Durchführungsachse über einen Radius, welcher den Gewinderadius des Gewindestabes überschreitet. Insbesondere sind die Durchführungsöffnungen in dem Montagezustand und in dem Haltezustand fluchtend zu dem Gewindestab ausgebildet. Insbesondere weist zumindest eine der Durchgangsöffnungen an zumindest einem Ende ihrer Erstreckung in Längsrichtung einen Bereich auf, in dem die Erstreckung quer zur Längsrichtung, insbesondere entlang eines Öffnungswinkels, der von der Längsachse ausgeht, welcher vorzugsweise größer als 20 °, insbesondere größer als 40 ° ist, insbesondere kleiner als 80 ° ist, entlang der Längsrichtung zunimmt. Insbesondere ist zumindest an einer der Durchgangsöffnungen an zumindest einem Ende seiner Erstreckung in Längsrichtung eine Fase ausgebildet, die insbesondere einen Fasenwinkel zwischen 20 ° und 70 ° aufweist.

In einer vorteilhaften Ausführungsform ist an dem Fixierteil ein Anlaufabschnitt ausgebildet. Der Anlaufabschnitt ist korrespondierend zu dem insbesondere sich verjüngend ausgebildeten, ersten Buchsenteil ausgebildet. Der Anlaufabschnitt weist insbesondere eine größere sich verjüngende Längserstreckung auf als der verjüngend ausgebildete Buchsenteil. Eine Bewegung des verjüngend ausgebildeten Buchsenteils relativ zu dem Anlaufabschnitt resultiert in einer senkrecht zur Längsrichtung erfolgenden Bewegung der Abschnitte des ersten Buchsenteils zueinander. Insbesondere ist der Anlaufabschnitt, insbesondere mit Unterbrechungen, umlaufend um die Längsachse ausgebildet. Insbesondere ist der Anlaufabschnitt durch zumindest eine Anlauffläche ausgebildet, welche in zu dem verjüngend ausgebildeten Bereich des ersten Buchsenteils korrespondierenden Winkeln entlang der Längsrichtung und quer zur Längsrichtung verläuft. Insbesondere weist der Anlaufabschnitt zumindest zwei Anlaufflächen auf, welche sich bezogen auf die Längsachse gegenüberliegen und/oder umfänglich um diese verteilt angeordnet sind, wobei die Anlaufflächen vorzugsweise die gleichen korrespondierenden Winkel aufweisen. Insbesondere umfasst die Pressfläche die Anlauffläche, besonders bevorzugt entspricht die Anlauffläche der Pressfläche. Insbesondere bildet die Anlauffläche einen Abschnitt aus, welcher eine Verschiebung des ersten Buchsenteils entlang der Längsrichtung, insbesondere in Richtung der sich verjüngenden Erstreckung, begrenzt.

In einer bevorzugten Ausführungsform ist das Fixierteil als Hülse ausgebildet, welche insbesondere lösbar mit einem Verschlussteil verbunden ist. Der Fixierteil kann den Verschlussteil umfassen. Die Hülse ist an einem Ende ihrer Erstreckung in Längsrichtung lösbar mit dem Verschlussteil verbunden. Der Verschlussteil kann zumindest eine der Durchgangsöffnungen aufweisen. Insbesondere verschließt der Verschlussteil eine endseitige Öffnung der Hülse in Längsrichtung. Vorzugsweise ist der erste Buchsenteil im Haltezustand, insbesondere außerdem im Montagezustand in der Hülse angeordnet. Insbesondere ist der erste Buchsenteil bezüglich seiner Beweglichkeit entlang der Längsrichtung zu beiden Seiten durch den Fixierteil begrenzt, wobei insbesondere eine solche Begrenzung durch den Verschlussteil ausgebildet wird. Insbesondere ist der erste Buchsenteil austauschbar, indem der Verschlussteil von der Hülse lösbar und nach Austausch des ersten Buchsenteils mit der Hülse wieder verbindbar ist. Der Verschlussteil kann beispielsweise mittels einer Gewindeverbindung oder einer Rastverbindung mit der Hülse verbunden sein. Die Rastverbindung kann durch jeweils zueinander korrespondierende und von der Hülse und dem Verschlussteil jeweils ausgebildete Schnappelemente erfolgen.

Die Erfindung umfasst weiterhin ein System zur lösbaren Fixierung einer Abdeckplatte relativ zu einer Unterputzeinheit, insbesondere zu einem Spülkasten, insbesondere zu einer Wandung des Spülkastens, wobei das System zumindest eine Montageeinrichtung in einer erfindungsgemäßen Ausführungsform sowie die Unterpützeinheit und die Abdeckplatte umfasst. Im Betriebszustand befindet sich die Montageeinrichtung in ihrem Haltezustand, wobei die Gewindebuchse in einem Abschnitt der Unterputzeinheit, insbesondere in dem oben erläuterten Wandabschnitt der Unterputzeinheit, insbesondere in einem Abschnitt des Spülkastens, insbesondere einem Abschnitt der Wandung des Spülkastens, fixiert, insbesondere eingefügt ist. Der Abschnitt befindet sich insbesondere oberhalb eines wassertragenden Bereichs des Spülkastens, **d. h.** in dem Bereich des Spülkastens, in dem der Spülkasten bestimmungsgemäß Spülwasser sammelt und für einen Spülvorgang bereithält. Bevorzugt erstreckt sich in dem Betriebszustand zu beiden Seiten des Abschnitts der Unterputzeinheit ein Bereich der Gewindebuchse.

Grundsätzlich können zwischen dem Abschnitt der Unterputzeinheit und der Montageeinrichtung dichtende und/oder haftvermittelnde Medien, beispielsweise Kunststoffharze oder Kunststoffdichtmassen eingebracht sein. Die Unterputzeinheit ist in dem Betriebszustand insbesondere ausschließlich über die Gewindebuchse mit dem Gewindestab verbunden. Der Gewindestab ist in dem Betriebszustand mit der Abdeckplatte und der Gewindebuchse verbunden. Im Betriebszustand ist die Abdeckplatte durch die Montageeinrichtung an der Unterputzeinheit gehalten. Insbesondere ist die Abdeckplatte im Betriebszustand durch mehrere der Montageeinrichtungen an der Unterputzeinheit gehalten. Insbesondere ist die Abdeckplatte im Betriebszustand in einem Abstand von dem Abschnitt der Unterputzeinheit über die Montageeinrichtung an der Unterputzeinheit gehalten, wobei sie unmittelbar an zumindest einem weiteren Element anliegt, wobei das weitere Element beispielsweise als Vorwand ausgebildet sein kann.

Insbesondere wird die Abdeckplatte über die Montageeinrichtung mittelbar auch an dem weiteren Element gehalten. Insbesondere wird die Abdeckplatte ausschließlich über erfindungsgemäße Montageeinrichtungen, insbesondere über zwei der Montageeinrichtungen, an der Unterputzeinheit gehalten. Insbesondere umfasst das System mehrere, insbesondere zumindest zwei, besonders bevorzugt genau zwei Montageeinrichtungen.

Die Erfindung umfasst weiterhin eine Verwendung von mehreren erfindungsgemäßen Montageeinrichtungen zur lösbaren Fixierung einer als Betätigungsplatte ausgebildeten Abdeckplatte an einer Unterputzeinheit, insbesondere an einer Wandung eines Spülkastens. Die Betätigungsplatte weist Betätigungstasten zum Betätigen der Unterputzeinheit auf.

Die Verwendung sieht vor, dass die Montageeinrichtungen jeweils mittels ihrer Gewindebuchse an der Unterputzeinheit fixiert werden. Insbesondere wird die jeweilige Gewindebuchse mit den Befestigungsabschnitten an der Unterputzeinheit fixiert. Nach zuvor erfolgtem Fixieren der Gewindebuchsen wird der Gewindestab einer jeden Montageeinrichtung zunächst durch eine für ihn jeweils vorgesehene Öffnung der Abdeckplatte durchgeführt und in die Gewindebuchse eingeführt. Durch das Einführen des Gewindestabs der jeweiligen Montageeinrichtung in die Gewindebuchse der jeweiligen Montageeinrichtung wird der Montagezustand der jeweiligen Montageeinrichtung hergestellt. Insbesondere wird der Montagezustand dadurch hergestellt, dass der Gewindestab nach dem Einführen in die Gewindebuchse um eine Strecke entlang der Längsrichtung ausgehend von der Einführrichtung zurückgezogen wird, wodurch insbesondere der erste Buchsenteil in Anlage mit dem Fixierteil kommt, wobei vorzugsweise die Abschnitte in Kontakt mit den Pressflächen kommen. Nach der Realisierung des Montagezustands wird der Gewindestab jeder Montageeinrichtung relativ zur Gewindebuchse der jeweiligen Montageeinrichtung bewegt, wobei er zumindest zu Teilen der jeweiligen Gewindebuchse, insbesondere zumindest zum Fixierteil der Gewindebuchse, bewegt wird und insbesondere eine Relativbewegung zwischen den Abschnitten des ersten Buchsenteils und dem Gewindestab erfolgt. Durch die Bewegung des Gewindestabs der jeweiligen Montageeinrichtung nach der Realisierung des Montagezustands der jeweiligen Montageeinrichtung werden die Abschnitte der Gewindebuchse der jeweiligen Montageeinrichtung senkrecht zur Längsrichtung zueinander bewegt, bis die jeweilige Montageeinrichtung ihren Haltezustand erreicht. Insbesondere wird der erste Buchsenteil mit dem Erreichen des Haltezustands in Anlage mit der Anschlagsfläche gebracht. Vorzugsweise erfolgt die Bewegung ausgehend vom Montagezustand entsprechend einer Drehbewegung um den definierten Drehwinkel bis zum Erreichen des Haltezustands. Der definierte Drehwinkel beträgt insbesondere weniger als 270 °, bevorzugt weniger als 180 °. Insbesondere sieht die Verwendung vor, dass die Montageeinrichtung senkrecht zur Längsrichtung beabstandet von zumindest einer weiteren erfindungsgemäßen Montageeinrichtung an der Unterputzeinheit fixiert wird, welche ebenfalls nach der erfindungsgemäßen Verwendung der Montageeinrichtung befestigt wird. Vorzugsweise weisen im Betriebszustand alle in dem System verwendeten Montageeinrichtungen bezogen auf ihre Längsrichtung in die gleiche Richtung.

Gemäß einer weiteren Verwendung des Systems wird nach der Realisierung des Haltezustands der Gewindestab der Montageeinrichtung insbesondere relativ zu der Gewindebuchse und um seine Längsachse gedreht, während das Stabgewinde und das Buchsengewinde ineinandergreifen. Vorzugsweise wird dadurch eine Fixierkraft erzeugt, die zwischen der Abdeckplatte und der Unterputzeinheit wirkt und die Teile des Systems zueinander festlegt. Insbesondere wird durch die Verwendung die Abdeckplatte an der Vorwand fixiert, hinter der sich die Unterputzeinheit, insbesondere der Spülkasten, insbesondere die Wandung des Spülkastens befindet. Bevorzugt wird der Gewindestab nach der Realisierung des Haltezustandes um weniger als 360 °, bevorzugt weniger als 270 ° um die Längsachse gedreht, wobei ein kontinuierlicher Aufbau der Fixierkraft zur Fixierung der Abdeckplatte erfolgt. Bevorzugt wirkt die Fixierkraft nur durch das Ineinandergreifen von Buchsengewinde und Stabgewinde zwischen Gewindebuchse und Gewindestab. Bevorzugt wird die Abdeckplatte durch die Summe der Fixierkräfte durch alle im System zur Befestigung der Abdeckplatte an der Unterputzeinheit verwendeten Montageeinrichtungen an der Unterputzeinheit gehalten. Vorzugsweise liegt die Abdeckplatte im Betriebszustand an der Vorwand an, wobei zum Verdrehen oder Verschieben der Abdeckplatte relativ zur Unterputzeinheit eine Reibkraft überwunden werden muss, die insbesondere proportional zu den entlang der Längsrichtung wirkenden Fixierkräften ist.

Die Erfindung wird nachfolgend unter Bezugnahme auf 4 Figuren anhand von Ausführungsbeispielen erläutert.

Es zeigen:
- Figur 1:: in schematischen Prinzipdarstellungen verschiedene Ansichten auf Bestandteile einer Ausführungsform der erfindungsgemäßen Montageeinrichtung;
- Figur 2:: in schematischen Prinzipdarstellungen verschiedene Zustände der in Figur 1 dargestellten Ausführungsform;
- Figur 3:: in schematischen Prinzipdarstellungen das Fixierteil der in Figur 1 dargestellten Ausführungsform;
- Figur 4:: in einer schematischen Explosionsdarstellung eine Ausführungsform des erfindungsgemäßen Systems;

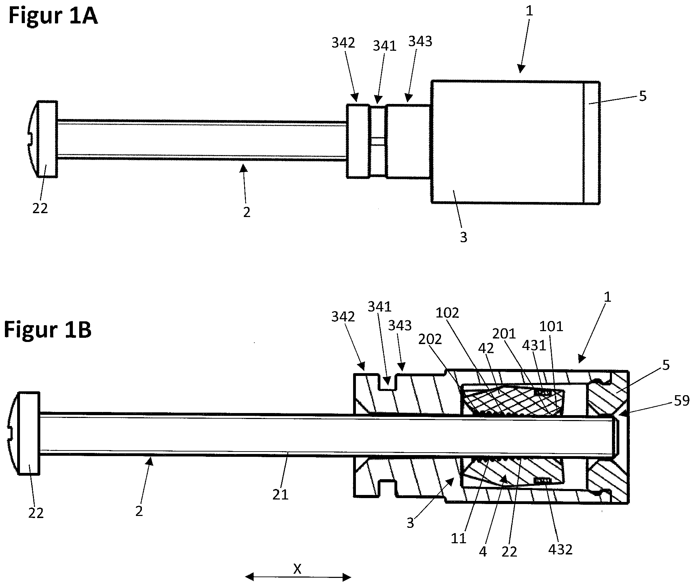

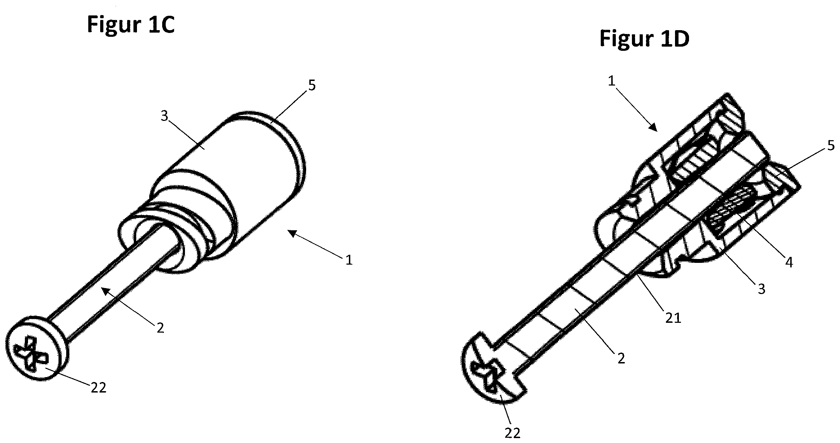

In Figur 1 umfassend die Figuren 1A-1D ist eine erste Ausführungsform der erfindungsgemäßen Montageeinrichtung dargestellt. Dabei zeigt Figur 1A eine Seitenansicht, Figur 1B einen Längsschnitt, wobei der Gewindestab nicht geschnitten dargestellt ist. Der Längsschnitt ist zudem in einer isometrischen Ansicht in Figur 1D offenbart. Weiterhin ist in Figur 1C eine Aufsicht auf die Ausführungsform im Montagezustand gezeigt. Die Montageeinrichtung besteht in dem Ausführungsbeispiel aus einer Gewindebuchse 1 und einem Gewindestab 2. Der Gewindestab ist entlang einer Längsrichtung X langestreckt ausgebildet und weist entlang einer Längsachse, die in der Längsrichtung X verläuft, ein um die Längsachse des Gewindestabs 2 umlaufendes Stabgewinde 21 auf. Der Gewindestab weist weiterhin ein Kopfelement 22 auf, welches als Schraubenkopf ausgebildet ist und Ausnehmungen aufweist, welche die Verwendung eines Kreuzschlitzschraubenziehers zur Verdrehung des Gewindestabes um die Längsachse erlauben.

Die Gewindebuchse umfasst einen ersten Buchsenteil 4 sowie einen zweiten Buchsenteil in Form eines Fixierteils 3. Der Fixierteil 3 ist als Hülse ausgebildet. Die Gewindebuchse weist ein Buchsengewinde 11 auf, welches korrespondierend zu dem Stabgewinde 21 ausgebildet ist und die gleiche Gewindesteigung aufweist wie das Stabgewinde 21. Der erste Buchsenteil weist zwei Abschnitte 41, 42 auf, die mittels elastischer Stege 431, 432 verbunden sind. Die elastischen Stege 431, 432 verlaufen mit konstantem Radius um die Längsachse L. Die Stege 431, 432 weisen in Längsrichtung X eine deutlich geringere Erstreckung als senkrecht zur Längsrichtung X auf, wobei die Stege 431, 432 umlaufend um die Längsachse einen konstanten Querschnitt aufweisen. Die Abschnitte 41, 42 bilden beide das Buchsengewinde 11 aus. Entlang der Längsrichtung X verändert sich die Höhe der Gewindestege des Buchsengewindes 11 dergestalt, dass die Höhe der Gewindestege im Haltezustand zum Kopfelement 22 des Gewindestabs 2 hin zumindest abschnittsweise zunimmt, was allgemein vorteilhaft sein kann. Der Gewindestab 2 ist durch die Gewindebuchse 1 geführt, wobei er durch eine Durchgangsöffnung 39 in den Fixierteil 3 und weiterhin durch eine Durchgangsöffnung 59 ragt, welche durch einen Verschlussteil 5 ausgebildet wird.

In Figur 1 ist die Montageeinrichtung im Montagezustand dargestellt. In diesem Zustand bildet in der gezeigten Ausführungsform der von dem Schraubenkopf 22 in Längsrichtung X abgewandte Bereich des Buchsengewindes 11 die erste Haltefläche 101 der Gewindebuchse 1 aus, die mit der korrespondierenden ersten Haltefläche 201 des Gewindestabs 2 in Anlage ist. Die in Längsrichtung X ausgehend von der ersten Haltefläche 101 der Gewindebuchse 1 in Richtung des Schraubenkopfes 22 neben der ersten Haltefläche 101 angeordnete, ebenfalls durch das Buchsengewinde 11 ausgebildete zweite Haltefläche 102 der Gewindebuchse 1 ist in Anlage mit dem Stabgewinde 21. Das Stabgewinde 21 bildet eine zweite Haltefläche 202 des Gewindestabs 2 aus, die durch die Überführung der Montageeinrichtung in den Haltezustand in Anlage mit der zweiten Haltefläche 102 der Gewindebuchse 1 bringbar ist. In manchen Fällen kann zumindest eine der ersten Halteflächen 101, 201 mit einer der zweiten Halteflächen 102, 202 eine Schnittmenge ausbilden oder insbesondere dieser entsprechen. Die Halteflächen entsprechen in der vorliegenden Ausführungsform dem Bereich der Gewinde 11, 21, die sich in den jeweiligen Zuständen miteinander in Eingriff befinden. Dieser Bereich kann, abhängig von dem vorgesehenen Spiel der Gewindepaarung, Bereiche der Gewindestege, insbesondere ihrer Flanken sowie den Gewindegrund umfassen. Der Verschlussteil 5 ist mittels einer lösbaren Rastverbindung mit dem Fixierteil 3 verbunden. Die Rastverbindung ist dadurch hergestellt, dass ein von dem Verschlussteil 5 ausgebildeter Wulst, welcher sich quer zur Längsrichtung X umlaufend um die Längsachse erstreckt, in eine korrespondierende umlaufende Nut eingreift, welche durch den Fixierteil 3 ausgebildet ist. Während Verschlussteil 5 und Fixierteil 3 voneinander getrennt sind, ist der erste Buchsenteil 4 entnehmbar. Die Durchgangsöffnungen 39, 59 sind jeweils mit zumindest einer Fase ausgebildet, wodurch ein Einführen des Gewindestabs 2 in die jeweilige Durchgangsöffnung 39, 59 erleichtert ist. Der erste Buchsenteil 4 ist in einem Bereich seiner zwei Abschnitte 41, 42 auf der in Figur 1A nach links weisenden Seite entlang der Längsrichtung verjüngend ausgebildet. Die beiden Abschnitte 41, 42 weisen in einem sich verjüngend ausgebildeten Bereich die Verjüngung durch jeweils eine radial zur Längsachse X außenliegende, konisch ausgebildete Fläche auf, welche bezogen auf die Längsachse ein einem Verjüngungswinkel angeordnet ist. Korrespondierend zu den konisch ausgebildeten Flächen bildet der Fixierteil 3 umlaufend verteilt die Pressflächen aus, die ebenfalls entlang der Längsrichtung X dergestalt ausgebildet sind, dass sich der Fixierteil 3 entlang der Längsrichtung X verjüngt, wobei die Verjüngung entsprechend einem Verjüngungswinkel zwischen Längsachse und der verjüngten Fläche konisch verläuft. Quer zur Längsrichtung X verlaufend sowie an die Pressflächen angrenzend sind Anschlagflächen vorgesehen, wobei der erste Buchsenteil 4 bei Erreichen des Haltezustands mit korrespondierend ausgebildeten Flächen an die Anschlagflächen anschlägt, wobei eine weitere Verdrehung um die Längsachse entlang der Verdrehrichtung, entlang welcher der Haltezustand ausgehend vom Montagezustand erreicht wurde, durch die Anschlagwirkung der Anschlagflächen blockiert ist. Der Fixierteil 3 weist an einem von dem Verschlussteil 5 abgewandten Ende seiner Erstreckung in Längsrichtung einen ersten Befestigungsabschnitt 341, einen zweiten Befestigungsabschnitt 342 und einen dritten Befestigungsabschnitt 343 auf, wobei die Befestigungsabschnitte direkt aneinander angrenzen. Der zweite Befestigungsabschnitt 342 und der dritte Befestigungsabschnitt 343 sind, wie insbesondere aus Figur 1C hervorgeht, bezüglich seiner senkrecht zur Längsrichtung X außenliegenden Fläche elliptisch ausgebildet. Zumindest ein Radius der Ellipse überschreitet die Erstreckungslänge des ersten Befestigungsabschnittes 341 senkrecht zur Längsrichtung X, wobei der erste Befestigungsabschnitt 341 unter Berücksichtigung der Durchgangsöffnung 39 einen entlang der Längsrichtung X im wesentlichen ringförmigen Querschnitt aufweist. Die Gewindebuchse 1 ist mit der Wandung des Spülkastens, bzw. einem mit der Wandung verbundenen Abschnitt, der beispielsweise durch einen Spritzschutzplatte bereitgestellt ist, die an der Wandung fixiert ist und eine in der Wandung vorgesehene Wartungsöffnung verdeckt, durch ein Durchführen des zweiten Befestigungsabschnitts 342 und ein Einführen des ersten Befestigungsabschnitts 341 durch und in die Wandung bzw. den mit der Wandung verbundenen Abschnitt sowie einem Verdrehen der Gewindebuchse 1 relativ zu der Wandung des Spülkastens zueinander um ca. 90 ° um die Längsachse verbindbar, wobei der zweite und der dritte Befestigungsabschnitt 342, 343 jeweils mit einer Fläche, welche sich vornehmlich quer zur Längsrichtung erstreckt, wobei die Flächen einander zugewandt sind, an der Wandung bzw. dem Abschnitt anliegen, wobei der erste Befestigungsabschnitt 341 in der Wandung liegt, sodass die Gewindebuchse 1 durch die Wandung des Spülkastens ragt.

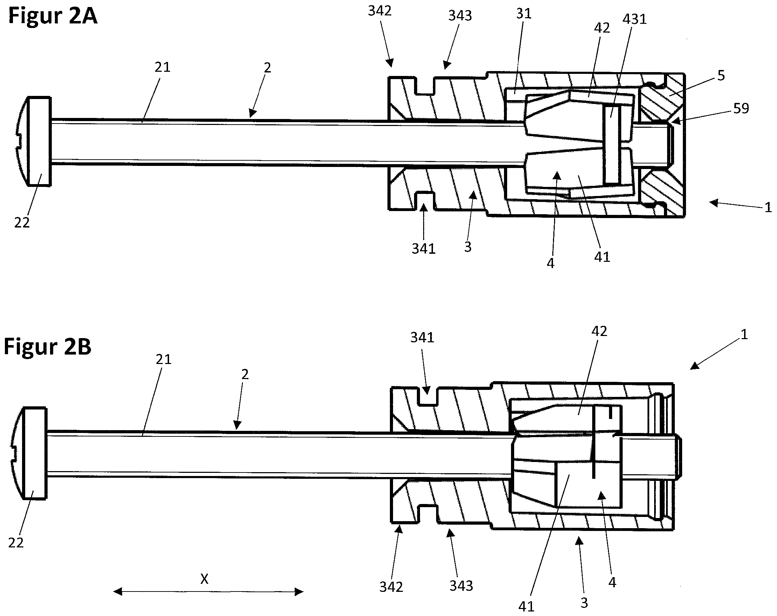

Figur 2 zeigt in Figur 2A die Ausführungsform der erfindungsgemäßen Montageeinrichtung in einem Montagezustand und in Figur 2B in einem Haltezustand. Figur 2A zeigt den Gewindestab 2, der durch die Gewindebuchse 1 geführt ist und sich mit seinem Stabgewinde 21 auf Höhe, bezogen auf die Längsrichtung der elastischen Stege 431, 432 im Eingriff mit dem Buchsengewinde 11 befindet. Der Haltezustand, der in Figur 2B dargestellt ist, ist durch ein Verdrehen des Gewindestabs 2 relativ zum Fixierteil 3 entlang einer Bewegungsstrecke, die um die Längsachse verläuft, wobei der erste Buchsenteil 4 gemeinsam mit dem Gewindestab 2 relativ zum Fixierteil 3 verdrehbar ist, erreichbar, nachdem zuvor der Buchsenteil 4 mittels des Gewindestabs 2 entlang der Längsrichtung X so verschoben wurde, dass sein sich verjüngender Abschnitt in Anlage mit den Pressflächen 31 des Fixierteils 3 ist. Während des Verdrehens liegt der erste Buchsenteil 4 mit seinem sich verjüngend ausgebildeten Bereich an der Pressfläche 31 des Fixierteils 3 an, wobei simultan zu der Verdrehbewegung die Abschnitte 41, 42 des ersten Buchsenteils 4 eine Bewegung zueinander ausführen, wobei sich durch die elastischen Stege 431, 432 proportional zur Verdrehbewegung eine Rückstellkraft ausbildet. Durch die Bewegung der Abschnitte 41, 42 zueinander kommt der von den elastischen Stegen 431, 432 in Längsrichtung X versetzte Bereich des Buchsengewindes 11, welcher höhere Gewindestege aufweist, mit dem Stabgewinde 21 in Eingriff. Bei der vorliegenden Ausführungsform ist somit der erste Buchsenteil 4 relativ zum Fixierteil 3 über eine Bewegungsstrecke beweglich, die vorliegend eine Drehbewegung umfasst, über die die Abschnitte 41, 42 senkrecht zur Längsrichtung X aufeinander zubewegt werden, wenn die Drehbewegung vom Montagezustand zum Haltezustand hin durchgeführt wird, wobei die Drehbewegung durch den Gewindestab 2 auflängbar ist, da im Montagezustand eine hinreichende Reibkraft zwischen Gewindestab 2 und dem ersten Buchsenteil 4 besteht.

In Figur 2B ist der Verschlussteil 5 nicht dargestellt. In dem dort dargestellten Haltezustand hintergreifen die Gewindestege des Stabgewindes 21 die Gewindestege des Buchsengewindes 11 dergestalt, dass eine freie Verschiebung des Gewindestabes 2 relativ zur Gewindebuchse 3 ohne eine gewindetypische Zwangskopplung mit einer Rotationsbewegung der Gewindebuchse 1 relativ zum Gewindestab 2 um die Längsachse nicht mehr zerstörungsfrei möglich ist. Die Montageeinrichtung ist in der dargestellten Ausführungsform durch eine Verdrehbewegung in entgegengesetzter Verdrehrichtung von Gewindestab 2 und erstem Buchsenteil 4 relativ zum Fixierteil 3 aus dem Haltezustand lösbar und in den Montagezustand bringbar.

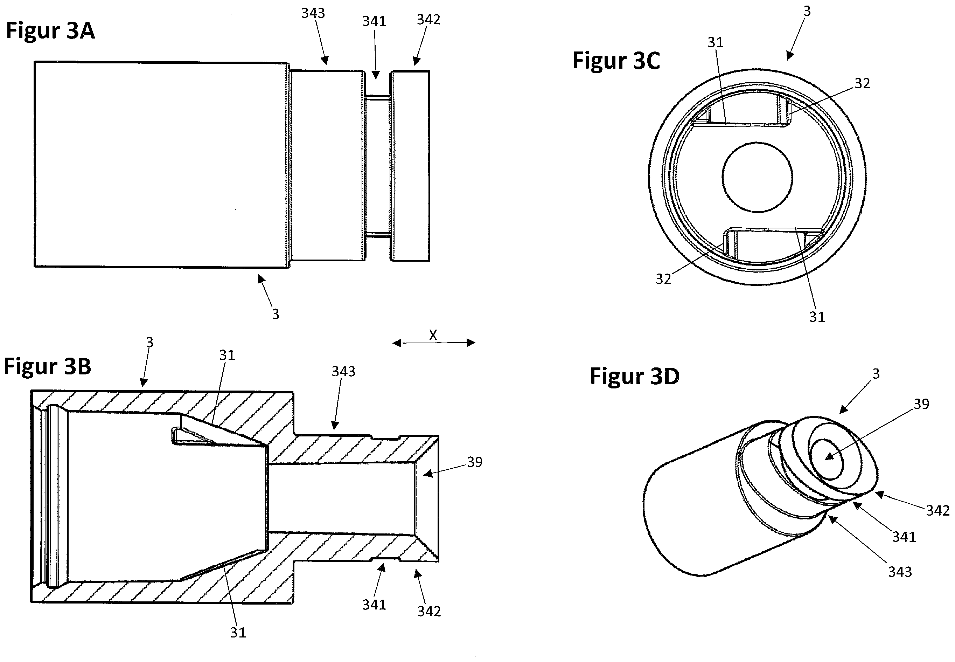

Figur 3 zeigt den Fixierteil der Gewindebuchse 1 in verschiedenen Prinzipdarstellungen, darunter eine Aufsicht in Figur 3A, eine Darstellung eines Schnitts entlang der Längsrichtung in Figur 3B, eine Darstellung eines Schnitts senkrecht zur Längsrichtung X in Figur 3C und eine isometrische Ansicht in Figur 3D. Der Verschlussteil ist nicht gezeigt. Das Bauteil ist einstückig als Spritzgussteil ausgeführt. An einem Ende der Erstreckung in Längsrichtung X bildet die Durchgangsöffnung 39 eine Fase aus, die ein erleichtertes Einführen des Gewindestabes 2 in die Gewindebuchse 1 ermöglicht. In der Ausführungsform und allgemein vorteilhaft sind die Befestigungsabschnitte 341, 342, 343 in Längsrichtung X neben dem Bereich angeordnet, welcher den ersten Buchsenteil 4 aufnimmt. Der Fixierteil weist in dem Bereich, der den ersten Buchsenteil 4 aufnimmt, die Pressflächen 31 auf zwei radial gegenüberliegenden Seiten auf, die, wie in Figur 3C zu erkennen ist, zueinander in einer Transversalrichtung, die senkrecht zur Längsrichtung X verläuft, versetzt angeordnet sind. Die Pressfläche 31 ist verjüngend ausgebildet und verjüngt sich zu der Längsachse hin mit einem Verjüngungswinkel, wobei der Verjüngungswinkel in Verdrehrichtung zunimmt, sodass die Abschnitte 41, 42 während der Drehbewegung, die der erste Buchsenteil 4 relativ zum Fixierteil 3 zum Erreichen des Haltezustands ausgehend von dem Montagezustand durchführt, aufeinander zu bewegt werden. An jeweils einem Ende der Pressfläche 31 senkrecht zur Längsrichtung X bildet die Gewindebuchse 1 eine Stufe aus.

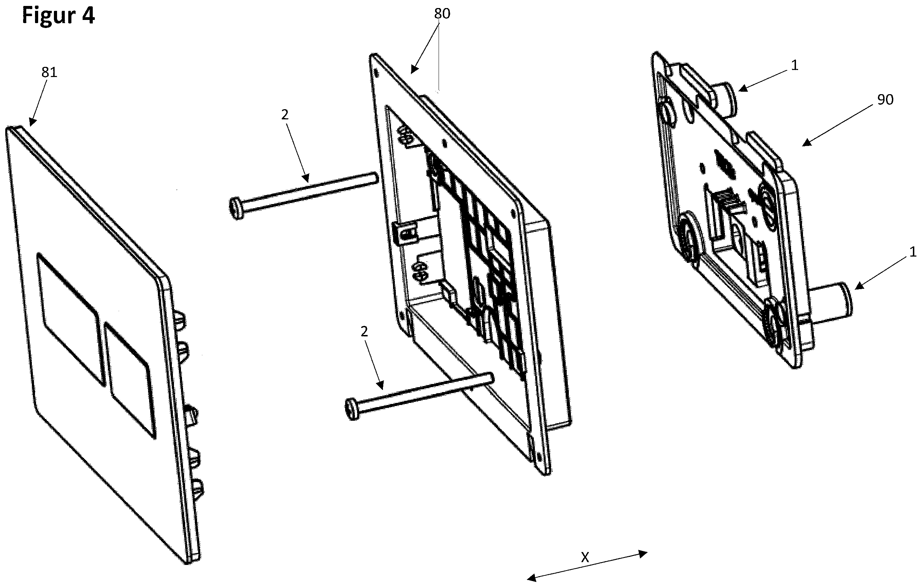

Figur 4 zeigt eine Ausführungsform des erfindungsgemäßen Systems umfassend zwei Montageeinrichtungen, die gemäß den oben erläutertem Ausführungsbeispiel ausgebildet sind und die senkrecht zur Längsrichtung X voneinander versetzt und beabstandet angeordnet sind, eine als Spülkasten ausgebildete Unterputzeinheit und eine als Betätigungsplatte ausgebildete Abdeckplatte. Die Betätigungsplatte umfasst einen Betätigungsplattenrahmen 80 und eine Betätigungsblende 81. Der Spülkasten umfasst eine Spritzschutzplatte 90 , die bestimmungsgemäß positionsfest an der Wandung des Spülkastens fixiert ist. In Figur 4 sind die Gewindebuchsen 1 jeweils in eine für den Betriebszustand des Systems erforderliche Verbindung mit der Spritzschutzplatte 90 des Spülkastens gebracht. Die Gewindestäbe 2 sind durch jeweils eine dafür vorgesehene Durchführung des Betätigungsplattenrahmens 80 durchführbar, wobei das Kopfelement 22 des Gewindestabes 2 mit seiner Erstreckung quer zur Längsrichtung X die Erstreckung der Durchführung des Betätigungsplattenrahmens 80 überragt, sodass der Betätigungsplattenrahmen 80 durch das Kopfelement 22 gegen eine nicht dargestellte Vorwand pressbar ist.

Die Gewindestäbe 2 sind jeweils in die Gewindebuchse 1 einführbar, indem sie entlang der Längsrichtung X in die jeweils zugeordnete Gewindebuchse 1 eingeführt werden, ohne dabei verdreht zu werden, bis die Kopfelemente 22 der Gewindestäbe 2 an dem Betätigungsplattenrahmen 80 der Betätigungsplatte anliegen. Anschließend werden die Gewindestäbe 2 jeweils relativ zu dem an der Spritzschutzplatte 90 fixierten, jeweils zugeordneten Fixierteil 3 verdreht, wodurch der Haltezustand der Montageeinrichtungen hergestellt wird, wobei durch Fortführen des Verdrehens in derselben Drehrichtung aufgrund des Zusammenwirkens von Stabgewinde und Buchsengewinde eine Presskraft von den Kopfelementen 22 auf den Betätigungsplattenrahmen 80 entlang der Längsrichtung X erzeugt wird. Die Betätigungsblende 81 ist entlang der Längsrichtung X auf den Betätigungsplattenrahmen 80 aufsetzbar und mittels Schnappverbindungen an der Betätigungsplatte fixierbar.

### Bezugszeichenliste

- 1: Gewindebuchse
- 2: Gewindestab
- 3: Fixierteil
- 4: erster Buchsenteil
- 5: Verschlussteil
- 11: Buchsengewinde
- 21: Stabgewinde
- 22: Kopfelement
- 31: Pressfläche
- 32: Anschlagfläche
- 39: Durchgangsöffnung
- 41, 42: Abschnitte
- 80: Betätigungsplattenrahmen
- 81: Betätigungsblende
- 90: Spritzschutzplatte
- 101, 201: erste Halteflächen
- 102, 202: zweite Halteflächen
- 331: Pressflächen
- 341: erster Befestigungsabschnitt
- 342: zweiter Befestigungsabschnitt
- 343: dritter Befestigungsabschnitt
- 431, 432: elastische Stege
- X: Längsrichtung

## Patentansprüche

1. Montageeinrichtung zur lösbaren Fixierung einer Abdeckplatte relativ zu einer Unterputzeinheit, insbesondere zu einem Spülkasten, die Montageeinrichtung umfassend einen sich mit seiner Längsachse in einer Längsrichtung (X) erstreckenden Gewindestab (2) und eine Gewindebuchse (1), wobei in einem Montagezustand der Montageeinrichtung und in einem Haltezustand der Montageeinrichtung der Gewindestab (2) jeweils innerhalb einer Längserstreckung von der Gewindebuchse (1) aufgenommen ist, wobei bei Aufbringung einer zwischen Gewindestab (2) und Gewindebuchse (1) in der Längsrichtung (X) wirkenden externen Verschiebekraft in dem Montagezustand der Gewindestab (2) entlang der Längsrichtung (X) relativ zu der Gewindebuchse (1) verschiebbar ist und in dem Haltezustand durch ein Ineinandergreifen von einem um die Längsachse des Gewindestabs umlaufenden Stabgewinde (21) und einem mit dem Stabgewinde (21) korrespondierenden Buchsengewinde (11) der Gewindebuchse (1) eine Verschiebung des Gewindestabs (1) zur Gewindebuchse (1) vermieden ist, wobei die Gewindebuchse (1) und der Gewindestab (2) zum Hemmen einer Relativbewegung entlang der Längsrichtung (X) in dem Montagezustand und in dem Haltezustand mit zueinander korrespondierenden Halteflächen aneinander anliegen,
**dadurch gekennzeichnet, dass**
die Gewindebuchse (1) und der Gewindestab (2) jeweils eine erste Haltefläche (101, 201) und eine zweite Haltefläche (102, 202) aufweisen, wobei die ersten Halteflächen (101, 201) von Gewindebuchse (1) und Gewindestab (2) zueinander korrespondierend ausgebildet sind und die zweiten Halteflächen (102, 202) von Gewindebuchse (1) und Gewindestab (2) zueinander korrespondierend ausgebildet sind und die Gewindebuchse (1) und der Gewindestab (2) in dem Montagezustand mit ihren ersten zueinander korrespondierenden Halteflächen (101, 201) und in dem Haltezustand mit ihren zweiten zueinander korrespondierenden Halteflächen (102, 202) aneinander anliegen und sich die erste Haltefläche (101) der Gewindebuchse (1) von der zweiten Haltefläche (102) der Gewindebuchse (1) unterscheidet, wobei die Gewindebuchse (1) zumindest zwei Abschnitte (41, 42) aufweist, die sich über einen selben Längsabschnitt der Gewindebuchse (1) innerhalb der Längserstreckung erstrecken und die senkrecht zur Längsrichtung (X) zueinander beweglich sind unter Veränderung ihrer Relativposition zueinander zum Verändern der zueinander korrespondierenden Halteflächen (101, 102, 201, 202), mit denen die Gewindebuchse (1) und der Gewindestab (2) zum Hemmen der Relativbewegung entlang der Längsrichtung (X) aneinander anliegen, wobei die Abschnitte (41, 42) die erste Haltefläche (101) der Gewindebuchse (1) und die zweite Haltefläche (102) der Gewindebuchse (1) ausbilden, wobei eine elastische Verbindung zwischen den Abschnitten (41, 42) vorgesehen ist, die einer Bewegung senkrecht zur Längsrichtung (X) der Abschnitte (41, 42) zueinander ausgehend von dem Montagezustand zu dem Haltezustand hin entgegenwirkt.

2. Montageeinrichtung nach Anspruch 1,
**dadurch gekennzeichnet, dass**
die Abschnitte (41, 42) der Gewindebuchse (1) durch einen ersten Buchsenteil (4) ausgebildet sind und die Gewindebuchse (1) einen als Fixierteil (3) ausgebildeten zweiten Buchsenteil aufweist, wobei der erste Buchsenteil (4) relativ zu dem Fixierteil (3) innerhalb eines Längserstreckungsbereichs über eine Bewegungsstrecke hinweg beweglich ist, wobei innerhalb des Längserstreckungsbereichs der erste Buchsenteil (4) und/oder der Fixierteil (3) sich verjüngend ausgebildet ist und der erste Buchsenteil (4) in jeder Position entlang der Bewegungsstrecke mit einer senkrecht zur Längsrichtung (X) wirkenden Presskraft an einer Pressfläche (31) des Fixierteils (3) angepresst anliegt, wobei über die Anlage des ersten Buchsenteils (4) an der Pressfläche (31) des Fixierteils (3) die Relativposition der Abschnitte (41, 42) zueinander festgelegt ist.

3. Montageeinrichtung nach einem der vorangehenden Ansprüche,
**dadurch gekennzeichnet, dass**
die elastische Verbindung durch zumindest einen elastischen Steg (431, 432) ausgebildet ist, der senkrecht zur Längsrichtung (X) verläuft.

4. Montageeinrichtung nach Anspruch 2 und insbesondere nach Anspruch 3,
**dadurch gekennzeichnet, dass**
der erste Buchsenteil (4) im Haltezustand an zumindest einer von dem Fixierteil (3) ausgebildeten Anschlagfläche (32) anliegt, wobei die Anschlagfläche (32) die Beweglichkeit des ersten Buchsenteils (4) relativ zum Fixierteil und die Veränderung der Relativposition der Abschnitte (41, 42) des ersten Buchsenteils (4) begrenzt.

5. Montageeinrichtung nach Anspruch 4,
**dadurch gekennzeichnet, dass**
der erste Buchsenteil (4) in dem Montagezustand von der Anschlagfläche (32) beabstandet ist und ausgehend von dem Montagezustand durch eine Verschiebebewegung relativ zum Fixierteil in Anlage mit der Anschlagfläche (32) des Fixierteils bringbar ist, wobei insbesondere die Anschlagfläche (32) außerhalb der Pressfläche (31) liegt, wobei insbesondere die Verschiebebewegung eine Drehbewegung des ersten Buchsenteils (4) um eine entlang der Längsrichtung (X) verlaufende Drehachse umfasst, wobei der Buchsenteil (12) und der Fixierteil (3) dergestalt zueinander korrespondierend ausgebildet sind, dass ausgehend von dem Montagezustand der Haltezustand durch Ausführen der Drehbewegung des ersten Buchsenteils (4) um einen definierten Drehwinkel erreichbar ist, welcher insbesondere weniger als 270°, bevorzugt weniger als 180° beträgt.

6. Montageeinrichtung nach einem der vorangehenden Ansprüche,
**dadurch gekennzeichnet, dass**
die Gewindebuchse (1) eine Verdrehsicherung aufweist, die ein Verdrehen des Fixierteils (3) und des ersten Buchsenteils (4) zueinander um eine Achse, die entlang der Längsrichtung (X) verläuft, zumindest bei Überschreiten eines zugelassenen Winkelbereichs durch Begrenzungsmittel verhindert.

7. Montageeinrichtung nach einem der Ansprüche 2 bis 6,
**dadurch gekennzeichnet, dass**
zum Überführen der Montageeinrichtung von dem Haltezustand in den Montagezustand der erste Buchsenteil (4) durch Aufbringen einer Lösekraft relativ zum Fixierteil (3) bewegbar ist, wobei die Lösekraft über eine zwischen dem Gewindestab (2) und dem Fixierteil (3) wirkende externe Kraft auf den ersten Buchsenteil (4) aufprägbar ist.

8. Montageeinrichtung nach einem der Ansprüche 2 bis 7,
**dadurch gekennzeichnet, dass**
zumindest einer der zumindest zwei Abschnitte (41, 42) der Gewindebuchse (1) das Buchsengewinde (11) ausbildet, wobei sich innerhalb des Längserstreckungsbereichs, in dem der erste Buchsenteil (4) und/oder der Fixierteil (3) sich verjüngend ausgebildet ist, die Gewindetiefe des Buchsengewindes (11) entlang der Längsrichtung (X) verändert.

9. Montageeinrichtung nach einem der vorangehenden Ansprüche,
**dadurch gekennzeichnet, dass**
die Gewindebuchse (1), insbesondere zur Befestigung der Gewindebuchse (1) an der Unterputzeinheit, einen ersten Befestigungsabschnitt (341) und einen zweiten Befestigungsabschnitt (342) aufweist, die entlang der Längsrichtung (X) direkt benachbart sind, wobei eine Erstreckungslänge des ersten Befestigungsabschnitts (341) in einer senkrecht zur Längsrichtung (X) verlaufenden Erstreckungsrichtung eine Erstreckungslänge des zweiten Befestigungsabschnitts (342) in der Erstreckungsrichtung unterschreitet, wobei insbesondere der zweite Befestigungsabschnitt (342) ein Längsende der Gewindebuchse (1) ausbildet.

10. Montageeinrichtung nach einem der Ansprüche 2 bis 7,
**dadurch gekennzeichnet, dass** der erste Buchsenteil (12) der Gewindebuchse (1) in dem Fixierteil (3) angeordnet ist, sodass sich der Fixierteil (3) um den ersten Buchsenteil (4) erstreckt und insbesondere den vordefinierten Längserstreckungsbereich umschließt.

11. Montageeinrichtung nach einem der vorangehenden Ansprüche,
**dadurch gekennzeichnet, dass**
die Gewindebuchse (1) und der Gewindestab (2) an den zueinander korrespondierenden Halteflächen (101, 102, 201, 202) Gewinde (11, 21) ausbilden, die zumindest abschnittsweise Gewindestege aufweisen, und die im Haltezustand ineinandergreifen, sodass bezüglich der Längsrichtung (X) ein Formschluss vorliegt, wobei insbesondere die von den korrespondierenden Halteflächen (101, 102, 201, 202) ausgebildeten Gewindestege im Haltezustand weiter ineinandergreifen als im Montagezustand.

12. Montageeinrichtung nach einem der vorhergehenden Ansprüche,
**dadurch gekennzeichnet, dass**
die Gewindebuchse (1) an jedem ihrer Längsenden jeweils eine Durchführungsöffnung (39, 59) aufweist, die insbesondere in dem Haltezustand fluchtend zu dem Gewindestab (2) ausgebildet sind, wobei zumindest eine der Durchführungsöffnungen (39, 59) im Haltezustand in Längsrichtung (X) um mehr als 10 % der Längserstreckung der Gewindebuchse (1) von dem Buchsengewinde (11) beabstandet ist.

13. Montageeinrichtung nach einem der vorhergehenden Ansprüche,
**dadurch gekennzeichnet, dass**
zu dem sich verjüngend ausgebildeten erste Buchsenteil (4) an einem Ende seines definierten Längserstreckungsbereiches an dem Fixierteil (3) ein korrespondierender Anlaufabschnitt ausgebildet ist, welcher insbesondere eine größere verjüngende Längserstreckung aufweist als der verjüngend ausgebildete erste Buchsenteil (4), wobei eine Bewegung des verjüngend ausgebildeten ersten Buchsenteils (4) in Längsrichtung (X) relativ zu dem Anlaufabschnitt in eine senkrecht zur Längsrichtung (X) erfolgenden Bewegung der Abschnitte (41, 42) des ersten Buchsenteils (4) resultiert.

14. Montageeinrichtung nach einem der Ansprüche 10 bis 13,
**dadurch gekennzeichnet, dass**
der Fixierteil (3) als Hülse ausgebildet ist, wobei die Hülse an einem Ende ihrer Erstreckung in die Längsrichtung (X) bevorzugt lösbar mit einem Verschlussteil (5) verbunden ist, welches eine Öffnung der Hülse in Längsrichtung (X) verschließt.

15. System zur lösbaren Fixierung einer Abdeckplatte relativ zu einer Unterputzeinheit umfassend eine Montageeinrichtung nach einem der vorhergehenden Ansprüche, die Unterputzeinheit und die Abdeckplatte,
**dadurch gekennzeichnet, dass**
in einem Betriebszustand des Systems, in dem die Montageeinrichtung sich in ihrem Haltezustand befindet, die Gewindebuchse (1) in einem Abschnitt der Unterputzeinheit fixiert ist, wobei insbesondere sich ein Bereich der Gewindebuchse (1) in Längsrichtung (X) zu beiden Seiten des Abschnitts, erstreckt, wobei der Gewindestab (2) mit der Abdeckplatte verbunden ist, wobei im Betriebszustand die Abdeckplatte durch die Montageeinrichtung an der Unterputzeinheit gehalten ist.

16. Verwendung von mehreren Montageeinrichtungen, die jeweils nach einem der Ansprüche 1 bis 14 ausgebildet sind und somit jeweils eine Gewindebuchse (1) und einen Gewindestab (2) umfassen, zur lösbaren Fixierung der Abdeckplatte an einer Unterputzeinheit, wobei die Abdeckplatte als Betätigungsplatte ausgebildet ist und Betätigungstasten zum Betätigen der Unterputzeinheit aufweist,
**dadurch gekennzeichnet, dass**
die Montageeinrichtungen jeweils mittels ihrer Gewindebuchse (1) an der Unterputzeinheit fixiert werden, wobei nach einem Fixieren der Gewindebuchsen (1) an der Unterputzeinheit der Gewindestab (2) einer jeden Montageeinrichtung zunächst durch eine dafür vorgesehene Öffnung der Abdeckplatte durchgeführt und in die Gewindebuchse (1) der jeweiligen Montageeinrichtung eingeführt wird, wodurch der Montagezustand der jeweiligen Montageeinrichtung hergestellt wird, wobei nach der Realisierung des Montagezustands der Gewindestab (2) jeder Montageeinrichtung relativ zur Gewindebuchse (1) der jeweiligen Montageeinrichtung bewegt wird und hierdurch die Abschnitte (41, 42) der Gewindebuchse (1) senkrecht zur Längsrichtung (X) zueinander bewegt werden, bis die jeweilige Montageeinrichtung ihren Haltezustand erreicht, wobei insbesondere nach der Realisierung des Haltezustands der jeweiligen Montageeinrichtung der Gewindestab (2) der jeweiligen Montageeinrichtung gedreht wird, während das Stabgewinde (21) und das Buchsengewinde (11) von Gewindestab (2) und Gewindebuchse (1) der jeweiligen Montageeinrichtung ineinandergreifen, wobei insbesondere eine Fixierkraft aufgebaut wird, die die Abdeckplatte an der Unterputzeinheit fixiert.

## Claims

1. Mounting device for releasably fixing a cover plate relative to a flush-mounting unit, in particular to a cistern, the mounting device comprising a threaded rod (2) extending with its longitudinal axis in a longitudinal direction (X) and a threaded bushing (1), wherein in a mounting state of the mounting device and in a holding state of the mounting device the threaded rod (2) is in each case received within a longitudinal extension by the threaded bushing (1), wherein, when an external displacement force acting between the threaded rod (2) and the threaded bushing (1) in the longitudinal direction (X) is applied, the threaded rod (2) is displaceable along the longitudinal direction (X) relative to the threaded bushing (1) in the mounting state and a displacement of the threaded rod (2) relative to the threaded bushing (1) is prevented in the holding state by an engagement of a rod thread (21) extending around the longitudinal axis of the threaded rod and a bushing thread (11) of the threaded bushing (1) corresponding to the rod thread (21), wherein the threaded bushing (1) and the threaded rod (2) bear against one another with holding surfaces corresponding to one another in order to inhibit a relative movement along the longitudinal direction (X) in the mounting state and in the holding state,
**characterized in that**
the threaded bushing (1) and the threaded rod (2) each have a first holding surface (101, 201) and a second holding surface (102, 202), the first holding surfaces (101, 201) of the threaded bushing (1) and the threaded rod (2) being designed to correspond to one another and the second holding surfaces (102, 202) of the threaded bushing (1) and the threaded rod (2) being designed to correspond to one another and the threaded bushing (1) and the threaded rod (2) bearing against each other with their first mutually corresponding holding surfaces (101, 201) in the mounting state and bearing against each other with their second mutually corresponding holding surfaces (102, 202) in the holding state and the first holding surface (101) of the threaded bushing (1) being different from the second holding surface (102) of the threaded bushing, wherein the threaded bushing (1) has at least two sections (41, 42) which extend over a same length portion of the threaded bushing (1) within the longitudinal extension and which are movable relative to one another perpendicularly to the longitudinal direction (X) while changing their relative position with respect to one another for changing the mutually corresponding holding surfaces (101, 102, 201, 202) with which the threaded bushing (1) and the threaded rod (2) bear against one another for inhibiting the relative movement along the longitudinal direction (X), wherein the sections (41, 42) form the first holding surface (101) of the threaded bushing (1) and the second holding surface (102) of the threaded bushing (1), wherein an elastic connection is provided between the sections (41, 42), which counteracts a movement of the sections (41, 42) to each other perpendicular to the longitudinal direction (X) starting from the mounting state towards the holding state.

2. Mounting device according to claim 1,
**characterized in that**
the sections (41, 42) of the threaded bushing (1) are formed by a first bushing part (4) and the threaded bushing (1) has a second bushing part formed as a fixing part (3), wherein the first bushing part (4) is movable relative to the fixing part (3) within a longitudinal extension region over a movement distance, wherein the first bushing part (4) and/or the fixing part (3) is designed to taper within the longitudinal extension region and the first bushing part (4) bears against a pressing surface (31) of the fixing part (3) in each position along the movement distance with a pressing force acting perpendicular to the longitudinal direction (X), wherein the relative position of the sections (41, 42) to one another is determined via the bearing of the first bushing part (4) against the pressing surface (31) of the fixing part (3).

3. Mounting device according to any one of the preceding claims,
**characterized in that**
the elastic connection is formed by at least one elastic bridge (431, 432) which extends perpendicular to the longitudinal direction (X).

4. Mounting device according to claim 2 and in particular according to claim 3,
**characterized in that**
in the holding state, the first bushing part (4) bears against at least one stop surface (32) formed by the fixing part (3), the stop surface (32) limiting the mobility of the first bushing part (4) relative to the fixing part and the change in the relative position of the sections (41, 42) of the first bushing part (4).

5. Mounting device according to claim 4,
**characterized in that**
the first bushing part (4) is spaced apart from the stop surface (32) in the mounting state and, starting from the mounting state, can be brought to bear against the stop surface (32) of the fixing part by a displacement movement relative to the fixing part, in particular wherein the stop surface (32) is located outside the pressing surface (31), in particular wherein the displacement movement involves a rotational movement of the first bushing part (4) about an axis of rotation running along the longitudinal direction (x), wherein the bushing part (12) and the fixing part (3) are designed to correspond to one another in such a way that, starting from the mounting state, the holding state can be achieved by performing the rotational movement of the first bushing part (4) through a defined angle of rotation, which is in particular less than 270°, preferably less than 180°.

6. Mounting device according to any one of the preceding claims,
**characterized in that**
the threaded bushing (1) has an anti-rotation device which prevents the fixing part (3) and the first bushing part (4) from rotating relative to one another about an axis which runs along the longitudinal direction (X), at least when an allowable angular region is exceeded by limiting means.

7. Mounting device according to any one of claims 2 to 6,
**characterized in that**
for transferring the mounting device from the holding state to the mounting state, the first bushing part (4) can be moved relative to the fixing part (3) by applying a releasing force, the releasing force being imparted on the first bushing part (4) via an external force acting between the threaded rod (2) and the fixing part (3).

8. Mounting device according to any one of claims 2 to 7,
**characterized in that**
at least one of the at least two sections (41, 42) of the threaded bushing (1) forms the bushing thread (11), wherein the thread depth of the bushing thread (11) changes along the longitudinal direction (X) within the longitudinal extension region in which the first bushing part (4) and/or the fixing part (3) is formed in a tapering manner.

9. Mounting device according to any one of the preceding claims,
**characterized in that**
the threaded bushing (1), in particular for fastening the threaded bushing (1) to the flush-mounting unit, has a first fastening section (341) and a second fastening section (342) which are directly adjacent along the longitudinal direction (X), wherein an extension length of the first fastening section (341) in an extension direction extending perpendicular to the longitudinal direction (X) is less than an extension length of the second fastening section (342) in the extension direction, wherein in particular the second fastening section (342) forms a longitudinal end of the threaded bushing (1).

10. Mounting device according to any one of claims 2 to **7,**
**characterized in that** the first bushing part (12) of the threaded bushing (1) is arranged in the fixing part (3) so that the fixing part (3) extends around the first bushing part (4) and in particular encloses the predefined longitudinal extension region.

11. Mounting device according to any one of the preceding claims,
**characterized in that**
the threaded bushing (1) and the threaded rod (2) form threads (11, 21) on the holding surfaces (101, 102, 201, 202) corresponding to one another, which threads have threaded ridges at least in sections and which engage into each other in the holding state, so that there is a positive locking with respect to the longitudinal direction (X), in particular the threaded ridges formed by the corresponding holding surfaces (101, 102, 201, 202) engaging into each other farther in the holding state than in the mounting state.

12. Mounting device according to any one of the preceding claims,
**characterized in that**
the threaded bushing (1) has, at each of its longitudinal ends, a respective feed-through opening (39, 59) which, in particular in the holding state, are formed in alignment with the threaded rod (2), at least one of the feed-through openings (39, 59) being spaced apart from the bushing thread (11) in the longitudinal direction (X) by more than 10% of the longitudinal extent of the threaded bushing (1) in the holding state.

13. Mounting device according to any one of the preceding claims,
**characterized in that**
at one end of the defined longitudinal extension region of the tapering first bushing part (4) a corresponding run-on section is formed on the fixing part (3) which, in particular, has a larger tapering longitudinal extension than the tapering first bushing part (4), wherein a movement of the tapering first bushing part (4) in the longitudinal direction (X) relative to the run-on section results in a movement of the sections (41, 42) of the first bushing part (4) perpendicular to the longitudinal direction (X).

14. Mounting device according to any one of claims 10 to 13,
**characterized in that**
the fixing part (3) is designed as a sleeve, the sleeve being preferably detachably connected at one end of its extension in the longitudinal direction (X) to a closure member (5), which closes an opening of the sleeve in the longitudinal direction (X).

15. System for releasably fixing a cover plate relative to a flush-mounting unit, comprising a mounting device according to any one of the preceding claims, the flush-mounting unit and the cover plate,
**characterized in that**
in an operating state of the system, in which the mounting unit is in its holding state, the threaded bushing (1) is fixed in a section of the flush-mounting unit, wherein in particular a region of the threaded bushing (1) extends in the longitudinal direction (X) to both sides of the section, the threaded rod (2) is connected to the cover plate and the cover plate is held at the flush-mounting unit by the mounting device in the operating state.

16. Use of several mounting devices, each of which configured according to any one of claims 1 to 14 and thus comprising a respective threaded bushing (1) and a threaded rod (2) for releasably fixing the cover plate to a flush-mounting unit, wherein the cover plate is designed as an actuating plate and has actuating buttons for actuating the flush-mounting unit,
**characterized in that**
the mounting devices are each fixed to the flush-mounting unit by means of their threaded bushing, wherein after the fixing of the threaded bushings (1) to the flush-mounting unit, the threaded rod (2) of each mounting device is first passed through an opening of the cover plate provided for this purpose and is inserted into the threaded bushing (1) of the respective mounting device, whereby the mounting state of the respective mounting device is established, wherein, after establishing the mounting state, the threaded rod (2) of each mounting device is moved relative to the threaded bushing (1) of the respective mounting device and thereby the sections (41, 42) of the threaded bushing (1) are moved towards each other perpendicularly to the longitudinal direction (X) until the respective mounting device reaches its holding state, wherein in particular the threaded rod (2) of the respective mounting device is being rotated after the holding state of the respective mounting device has been established, while the rod thread (21) and the bushing thread (11) of threaded rod (2) and threaded bushing (1) of the respective mounting device engage with one another, wherein in particular a fixing force is being established which fixes the cover plate to the flush-mounting unit.

## Revendications

1. Dispositif de montage pour la fixation amovible d'une plaque de recouvrement par rapport à une unité encastrée, en particulier à un réservoir de chasse d'eau, le dispositif de montage comprenant une tige filetée (2) s'étendant avec son axe longitudinal dans une direction longitudinale (X) et une bague filetée (1), dans l'état de montage du dispositif de montage et dans un état de retenue du dispositif de montage, la tige filetée (2) étant reçue respectivement à l'intérieur d'une extension longitudinale par la bague filetée (1), lors de l'application d'une force de déplacement externe agissant entre la tige filetée (2) et la bague filetée (1) dans la direction longitudinale (X), dans l'état de montage, la tige filetée (2) pouvant être déplacée le long de la direction longitudinale (X) par rapport à la bague filetée (1) et, dans l'état de retenue, un déplacement de la tige filetée (2) par rapport à la bague filetée (1) étant évité par un engrènement d'un filetage de tige (21) s'étendant autour de l'axe longitudinal de la tige filetée et d'un filetage de bague (11) de la bague filetée (1) correspondant au filetage de tige (21), la bague filetée (1) et la tige filetée (2) s'appliquant l'une contre l'autre avec des surfaces de retenue correspondant l'une à l'autre pour inhiber un mouvement relatif le long de la direction longitudinale (X) dans l'état de montage et dans l'état de retenue,
**caractérisé en ce que**
la bague filetée (1) et la tige filetée (2) présentent chacune une première surface de retenue (101, 201) et une deuxième surface de retenue (102, 202), les premières surfaces de retenue (101, 201) de la bague filetée (1) et de la tige filetée (2) étant réalisées de manière à correspondre l'une à l'autre et les deuxièmes surfaces de retenue (102, 202) étant réalisées de manière à correspondre l'une à l'autre et, dans l'état de montage, la bague filetée (1) et la tige filetée (2) s'appliquant l'une contre l'autre par leurs deuxièmes surfaces de retenue (101, 201) correspondant l'une à l'autre et, dans l'état de retenue, s'appliquant l'une contre l'autre par leurs deuxièmes surfaces de retenue (102, 202) correspondant l'une à l'autre et la première surface de retenue (101) de la bague filetée (1) se distinguant de la deuxième surface de retenue (102) de la bague filetée (1), la bague filetée (1) comportant au moins deux sections (41, 42) qui s'étendent sur une même section de longueur de la bague filetée (1) à l'intérieur de l'extension longitudinale et qui sont mobiles l'une par rapport à l'autre perpendiculairement à la direction longitudinale (X) en modifiant leur position relative l'une par rapport à l'autre pour modifier les surfaces de retenue (101, 102, 201, 202) qui se correspondent l'une à l'autre et par lesquelles la bague filetée (1) et la tige filetée (2) s'appliquent l'une contre l'autre pour inhiber le mouvement relatif le long de la direction longitudinale (X), les sections (41, 42) formant la première surface de retenue (101) de la bague filetée (1) et la deuxième surface de retenue (102) de la bague filetée (1), une liaison élastique étant prévue entre les sections (41, 42), liaison qui s'oppose à un mouvement perpendiculaire à la direction longitudinale (X) des sections (41, 42) l'une par rapport à l'autre en partant de l'état de montage vers l'état de retenue.

2. Dispositif de montage selon la revendication 1,
**caractérisé en ce que**
les sections (41, 42) de la bague filetée (1) sont formées par une première partie de bague (4) et la bague filetée (1) présente une deuxième partie de bague formée comme partie de fixation (3), la première partie de bague (4) étant mobile par rapport à la partie de fixation (3) à l'intérieur d'une zone d'extension longitudinale sur une distance de déplacement, la première partie de bague (4) et/ou la pièce de fixation (3) étant réalisées en se rétrécissant à l'intérieur de la zone d'extension longitudinale et la première partie de bague (4) s'appliquant dans chaque position le long de la distance de déplacement avec une force de pression agissant perpendiculairement à la direction longitudinale (X) contre une surface de pression (31) de la partie de fixation (3), la position relative des sections (41, 42) l'une par rapport à l'autre étant déterminée par l'application de la première partie de bague (4) contre la surface de pression (31) de la partie de fixation (3).

3. Dispositif de montage selon l'une quelconque des revendications précédentes,
**caractérisé en ce que**
la liaison élastique est formée par au moins une entretoise élastique (431, 432) qui s'étend perpendiculairement à la direction longitudinale (X).

4. Dispositif de montage selon la revendication 2 et notamment selon la revendication 3,
**caractérisé en ce que**
la première partie de bague (4) est en appui, à l'état de retenue, contre au moins une surface de butée (32) formée par la partie de fixation (3), la surface de butée (32) limitant la mobilité de la première partie de bague (4) par rapport à la partie de fixation et la variation de la position relative des sections (41, 42) de la première partie de bague (4).

5. Dispositif de montage selon la revendication 4,
**caractérisé en ce que**
la première partie de bague (4) est espacée de la surface de butée (32) et, en partant de l'état de montage, peut être amenée en appui contre la surface de butée (32) de la partie de fixation par un mouvement de translation par rapport à la partie de fixation, la surface de butée (32) étant notamment située à l'extérieur de la surface de pression (31), le mouvement de translation comprenant notamment un mouvement de rotation de la première partie de bague (4) autour d'un axe de rotation s'étendant le long de la direction longitudinale (x), la partie de bague (12) et la partie de fixation (3) étant conçues en correspondance l'une avec l'autre de telle sorte que, en partant de l'état de montage, l'état de retenue peut être atteint en effectuant le mouvement de rotation de la première partie de bague (4) d'un angle de rotation défini, qui est notamment inférieur à 270°, de préférence inférieur à 180°.

6. Dispositif de montage selon l'une quelconque des revendications précédentes,
**caractérisé en ce que**
la bague filetée (1) présente un dispositif de sécurité anti-rotation qui empêche une rotation de la partie de fixation (3) et de la première partie de bague (4) l'une par rapport à l'autre autour d'un axe qui s'étend le long de la direction longitudinale (X), au moins en cas de dépassement d'une plage angulaire autorisée par des moyens de limitation.

7. Dispositif de montage selon l'une quelconque des revendications 2 à 6,
**caractérisé en ce que**
pour faire passer le dispositif de montage de l'état de retenue à l'état de montage, la première partie de bague (4) peut être déplacée par rapport à la partie de fixation (3) en appliquant une force de desserrage, la force de desserrage pouvant être appliquée à la première partie de bague (4) par l'intermédiaire d'une force externe agissant entre la tige filetée (2) et la partie de fixation (3).

8. Dispositif de montage selon l'une quelconque des revendications 2 à 7,
**caractérisé en ce que**
au moins l'une des au moins deux sections (41, 42) de la bague filetée (1) forme le filetage de la bague (11), la profondeur du filetage de la bague (11) variant le long de la direction longitudinale (X) à l'intérieur de la zone d'extension longitudinale dans laquelle la première partie de bague (4) et/ou la partie de fixation (3) est réalisée en se rétrécissant.

9. Dispositif de montage selon l'une quelconque des revendications précédentes,
**caractérisé en ce que**
la bague filetée (1), en particulier pour la fixation de la bague filetée (1) sur l'unité encastrée, présente une première section de fixation (341) et une deuxième section de fixation (342) qui sont directement voisines le long de la direction longitudinale (X), une longueur d'extension de la première section de fixation (341) dans une direction d'extension s'étendant perpendiculairement à la direction longitudinale (X) étant inférieure à une longueur d'extension de la deuxième section de fixation (342) dans la direction d'extension, la deuxième section de fixation (342) formant notamment une extrémité longitudinale de la bague filetée (1).

10. Dispositif de montage selon l'une quelconque des revendications 2 à 7,
**caractérisé en ce que** la première partie de bague (12) de la bague filetée (1) est disposée dans la partie de fixation (3), de sorte que la partie de fixation (3) s'étend autour de la première partie de bague (4) et entoure notamment la zone d'extension longitudinale prédéfinie.

11. Dispositif de montage selon l'une quelconque des revendications précédentes,
**caractérisé en ce que**
la bague filetée (1) et la tige filetée (2) forment, sur les surfaces de retenue (101, 102, 201, 202) qui se correspondent, des filetages (11, 21) qui présentent au moins par sections des nervures de filetage et qui s'engagent les uns dans les autres à l'état de retenue, de sorte qu'il existe une liaison par complémentarité de forme par rapport à la direction longitudinale (X), les nervures de filetage formées par les surfaces de retenue (101, 102, 201, 202) correspondantes s'engageant les unes dans les autres à l'état de retenue plus loin qu'à l'état de montage.

12. Dispositif de montage selon l'une quelconque des revendications précédentes,
**caractérisé en ce que**
la bague filetée (1) présente à chacune de ses extrémités longitudinales une ouverture de passage (39, 59) respective qui, en particulier dans l'état de retenue, est réalisée en alignement avec la tige filetée (2), au moins l'une des ouvertures de passage (39, 59) étant, dans l'état de retenue, espacée du filetage (11) de la bague dans la direction longitudinale (X) de plus de 10% de l'extension longitudinale de la bague filetée (1).

13. Dispositif de montage selon l'une quelconque des revendications précédentes,
**caractérisé en ce que**
une section de butée correspondante est formée sur la partie de fixation (3) à une extrémité de sa zone d'extension longitudinale définie pour la première partie de bague conique (4), section de butée qui présente en particulier une extension longitudinale conique plus grande que la première partie de bague conique (4), un mouvement de la première partie de bague (4) de forme conique dans la direction longitudinale (X) par rapport à la section de butée se traduit par un mouvement des sections (41, 42) de la première partie de bague (4) perpendiculaire à la direction longitudinale (X).

14. Dispositif de montage selon l'une quelconque des revendications 10 à 13,
**caractérisé en ce que**
la partie de fixation (3) est réalisée sous forme de douille, la douille étant reliée à une extrémité de son extension dans la direction longitudinale (X), de préférence de manière amovible, à une partie de fermeture (5) qui ferme une ouverture de la douille dans la direction longitudinale (X).

15. Système de fixation amovible d'une plaque de recouvrement par rapport à une unité encastrée, comprenant un dispositif de montage selon l'une des revendications précédentes, l'unité encastrée et la plaque de recouvrement,
**caractérisé en ce que**
dans un état de fonctionnement du système, dans lequel l'unité de montage est dans son état de retenue, la bague filetée (1) est fixée dans une section de l'unité encastrée, en particulier une zone de la bague filetée (1) s'étendant dans la direction longitudinale (X) de part et d'autre de la section, la tige filetée (2) étant reliée à la plaque de recouvrement, ladite plaque de recouvrement, dans l'état de fonctionnement, étant retenue sur l'unité encastrée par le dispositif de montage.

16. Utilisation d'une pluralité de dispositifs de montage, chacun configuré selon l'une quelconque des revendications 1 à 14 et donc comprenant une bague filetée (1) respective et une tige filetée (2) respective pour fixer de manière amovible la plaque de recouvrement à une unité encastrée, la plaque de recouvrement étant configurée comme une plaque d'actionnement et comprenant des boutons d'actionnement pour actionner l'unité encastrée,
**caractérisé en ce que**
les dispositifs de montage sont fixés à l'unité encastrée au moyen de sa bague filetée, après la fixation des bagues filetées (1) sur l'unité encastrée, la tige filetée (2) de chaque dispositif de montage étant d'abord passée à travers une ouverture prévue à cet effet de la plaque de recouvrement et introduite dans la bague filetée (1) du dispositif de montage respectif, ce qui établit l'état de montage du dispositif de montage respectif, la tige filetée (2) du chaque dispositif de montage étant déplacée par rapport à la bague filetée (1) du chaque dispositif de montage après la réalisation de l'état de montage et les sections (41, 42) de la bague filetée (1) étant ainsi déplacées l'une vers l'autre perpendiculairement à la direction longitudinale (X), jusqu'à ce que le dispositif de montage respectif atteigne son état de retenue, la tige filetée (2) du dispositif de montage respectif étant notamment tournée après la réalisation de l'état de retenue du dispositif de montage respectif, tandis que le filetage de tige (21) et le filetage de bague (11) de la tige filetée (2) et de la bague filetée (1) du dispositif de montage respectif s'engagent l'un dans l'autre, une force de fixation étant notamment établie, qui fixe la plaque de recouvrement sur l'unité encastrée.
